# EUROPÄISCHE PATENTSCHRIFT

(11) **EP 2 771 161 B1**
(45) Veröffentlichungstag und Bekanntmachung des Hinweises auf die Patenterteilung: **21.06.2017**
(21) Anmeldenummer: 12775495.0
(22) Anmeldetag: 18.10.2012
(51) Int. Cl.: B29C 33/42, B29C 43/08, B82Y 40/00

(54) **NANO-FORMGEBUNGSSTRUKTUR**
NANOSHAPING-STRUCTURE
STRUCTURE DE FORMAGE NANOMÉTRIQUE

(30) Priorität: 25.10.2011 DE 102011054789
(43) Veröffentlichungstag der Anmeldung: 03.09.2014
(73) Patentinhaber: Universität Kassel, 34125 Kassel (DE)
(72) Erfinder: HILLMER, Hartmut, 34128 Kassel (DE); REUTER, Sabrina, 34119 Kassel (DE); SMOLARCZYK, Marek Antoni, 34311 Naumburg (DE); WORAPATTRAKUL, Natalie, 34125 Kassel (DE); PILGER, Frank, 5400 Baden (CH)
(74) Vertreter: REHBERG HÜPPE + PARTNER
(86) Internationale Anmeldenummer: PCT/EP2012/070690
(87) Internationale Veröffentlichungsnummer: WO 2013/060618

(56) Entgegenhaltungen:
- WO-A1-2007/099907
- WO-A2-2006/066016
- JP-A- 2004 017 409
- US-A1- 2004 191 700
- US-A1- 2005 173 049
- US-A1- 2005 208 171
- US-A1- 2008 202 365
- US-A1- 2009 004 320

## Beschreibung

### TECHNISCHES GEBIET DER ERFINDUNG

Die Erfindung betrifft eine Nano-Formgebungsstruktur zur Herstellung einer Nanostruktur, die eine vorbestimmte Nanogeometrie besitzen soll. Hierbei wird unter einer Nanogeometrie eine Geometrie verstanden, deren maximale Erstreckung kleiner ist als 0,1 mm, wobei die maximale Erstreckung optional größer als 1 µm ist. Vorzugsweise ist die Nanogeometrie eine Geometrie, deren maximale Erstreckung im Bereich von 20 µm bis 500 µm, insbesondere 50 µm bis 300 µm, liegt. Die Erfindung betrifft weiterhin eine Folie mit mindestens einer derartigen Nano-Formgebungsstruktur. Schließlich betrifft die Erfindung Verfahren zur Herstellung einer Nanostruktur unter Verwendung einer Nano-Formgebungsstruktur.

### STAND DER TECHNIK

Unter Nanostrukturen im Sinne der vorliegenden Erfindung werden nanotechnische Strukturen subsumiert, welche eine Nanogeometrie besitzen.

Für die Fertigung von nanotechnischen Strukturen, welche eine Nanogeometrie oder eine Oberfläche mit Unebenheiten im Bereich von wenigen Nanometern besitzen, finden gemäß dem Stand der Technik Abformverfahren Einsatz, bei welchen eine Nano-Formgebungsstruktur als Stempel, Walze oder Template verwendet wird. Diese Nano-Formgebungsstrukturen besitzen eine Strukturgeometrie, welche eine Umkehrung oder Negativ-Strukturgeometrie der Nanogeometrie ist, welche die herzustellende nanotechnische Struktur besitzen soll. Für das eigentliche Abformen der nanotechnischen Struktur in der Nano-Formgebungsstruktur finden bevorzugt die folgenden beiden Varianten Einsatz:
- Die Formübertragung von der Nano-Formgebungsstruktur zu der herzustellenden nanotechnischen Struktur kann durch Anpressen des Materials oder eines Rohlings für die nanotechnische Struktur mit einer Normalkraft gegen die Nano-Formgebungsstruktur erfolgen, was ähnlich dem klassischen Stempelverfahren oder eine Prägepresse ist. Bei Einsatz derartiger, als Nano-Imprint Stempel bezeichneten Nano-Formgebungsstrukturen werden in der Kontaktfläche zwischen Nano-Formgebungsstruktur und dem Material für die nanotechnische Struktur zunächst Flächenpressungen ausgeübt, welche in Richtung der Flächennormalen bzw. der Normalkraft wirken. Im Bereich geneigter Teilbereiche der Strukturgeometrie der Nano-Formgebungsstruktur erfolgt eine Verformung des Materials für die nanotechnische Struktur unter einer Gleit- oder Fließbewegung des Materials gegenüber der Nano-Formgebungsstruktur, wobei in diesen Teilbereichen auch Flächenpressungs-Komponenten erzeugt werden können, welche quer zur Flächennormalen orientiert sind. Diese Flächenpressungs-Komponenten werden aber mit zunehmender Neigung der Teilbereiche der Strukturgeometrie in Richtung der Flächennormalen kleiner, so dass der Abformvorgang mit zunehmender Verkleinerung des Winkels der geneigten Teilbereiche gegenüber der Flächennormalen problematisch sein kann. Nach dem eigentlichen Abformvorgang erfolgt ein Aushärten des Materials der nanotechnischen Struktur mit anschließendem Abheben des Stempels. Ein derartiges Abformverfahren ist insbesondere in dem Patent US 5,772,905 B beschrieben.
- Ebenfalls bekannt sind Nano-Formgebungsstrukturen, welche durch eine mit einer Strukturgeometrie strukturierte Rolle oder Walze gebildet sind. Die strukturierte Rolle oder Walze wird ebenfalls mit einer Normalkraft an das beispielsweise plattenförmig bereitgestellte Material zur Herstellung der nanotechnischen Struktur gepresst. Mit dem Abrollen der Rolle oder Walze an dem Material der nanotechnischen Struktur wird die Strukturgeometrie der Mantelfläche der Rolle oder Walze mit hinreichender Normalspannung im Anpressbereich zwischen Rolle oder Walze einerseits und Material der nanotechnischen Struktur andererseits auf das Material der nanotechnischen Struktur übertragen. Grundsätzlich sind die Gleit- und Fließprozesse sowie die Mechanismen zur Erzeugung von Abformkräften auch quer zur aufgebrachten Normalkraft vergleichbar mit denen, wie diese zuvor für den Stempel beschrieben worden sind. Zusätzlich zu beachten ist hierbei aber, dass sowohl die Annäherung der Nano-Formgebungsstruktur an das Material der nanotechnischen Struktur als auch die Bewegung der Nano-Formgebungsstruktur von dem Material der nanotechnischen Struktur weg nicht geradlinig in Richtung der aufgebrachten Normalkraft erfolgt, sondern mit der abwälzenden Rollbewegung, was zusätzliche Anforderungen an die herstellbare Strukturgeometrie stellt und/oder zu Beeinträchtigungen des Abformverfahrens führen kann. Ein derartiges Abformverfahren über eine strukturierte Rolle oder Walze ist beispielsweise in US 2009/0183643 A1 beschrieben. Die Druckschrift beschreibt auch eine Ausbildung der Nano-Formgebungsstruktur als eine Art Folie oder Trum, die oder der (ähnlich einem Förderband) endlos über zwei Förderwalzen geführt wird. In dem jeweils ebenen Teilbereich der derart bewegten Nano-Formgebungsstruktur wird dieser Teilbereich mit einer Normalkraft gegen ein mit gleicher Geschwindigkeit bewegtes Substrat gepresst, so dass hier ein Abformen des Teilbereichs der Nano-Formgebungsstruktur erfolgen kann.

In WO 2007/099907 A1 ist ein Prägestempel für die Herstellung einer nanotechnischen Struktur mit einer nanostrukturierten Oberfläche beschrieben. Der Prägestempel weist einen starren Grundkörper und einen daran angeordneten Formkörper mit einer abzuformenden Strukturgeometrie auf. Für die Formübertragung der Strukturgeometrie wird der Prägestempel gegen ein Substrat gepresst, auf dem formbares Material zur Ausbildung der nanostrukturierten Oberfläche aufgetragen ist. Innerhalb des Formkörpers ist ein Gewicht vorgesehen, durch das der Formkörper derart verformt wird, dass beim Annähern des Prägestempels an das Material zunächst nur ein Teilbereich der Strukturgeomtrie mit dem Material in Berührung kommt. Mit dem Vergrößern der Anpresskraft verformt sich der Formkörper derart, dass sich der Teilbereich, über den das Material mit der Strukturgeometrie in Berührung ist, vergrößert, bis der Prägestempel schließlich mit seiner gesamten Strukturgeometrie mit dem Material in Berührung ist.

US 2009/0004320 A1 betrifft einen Prägestempel für die Herstellung einer nanotechnischen Struktur mit einer nanostrukturierten Oberfläche, bei dem die Formübertragung einer Strukturgeometrie des Prägestempels durch Anpressen des Prägestempels gegen ein Substrat, auf dem formbares Material zur Ausbildung der nanostrukturierten Oberfläche aufgetragen ist, erfolgt. Um die Strukturgeometrie des Prägestempels auch im Bereich von Wölbungen des Substrats abzuformen, weist der Prägestempel einen Schichtaufbau auf mit einer elastischen Schicht, die sich beim Anpressen des Prägestempels gegen das Substrat entsprechend der Oberflächenkontur des Substrats verformt, und einer darauf angeordneten starren Schicht, die die abzuformende Struktur aufweist.

Aus US 2004/0191700 A1 ist ein Prägestempel für die Herstellung einer nanotechnischen Struktur mit einer nanostrukturierten Oberfläche bekannt, der grundsätzlich so wie der aus US 2009/0004320 A1 bekannte Prägestempel aufgebaut ist. Allerdings ist die elastische Schicht für ein gleichmäßiges Abformen unterschiedlich stark strukturierter Bereiche in Bereiche mit unterschiedlich großen Elastizitätsmodulen aufgeteilt. Dabei ist das Elastizitätsmodul in Bereichen starker Strukturierung größer als in Bereichen geringer Strukturierung.

In US 2005/0208171 A1 ist beschrieben, dass es bei der Herstellung einer nanotechnischen Struktur mittels eines Prägestempels zu unerwünschten Abweichungen einer Ist-Nanogeometrie der hergestellten nanotechnischen Struktur von einer Soll-Struktur kommen kann. Diese Abweichungen beruhen darauf, dass der Prägestempel ein endliches Elastizitätsmodul aufweist, weshalb Verformungen des Prägestempels insbesondere im Bereich zwischen zwei Stegen des Prägestempels beim Anpressen gegen das Material für die nanotechnische Struktur unvermeidbar sind. Um derartige Abweichungen zu minimieren, schlägt US 2005/0208171 A1 vor, Ausnehmungen innerhalb des Prägestempels vorzusehen, die in einer Projektion in Richtung der Anpresskraft mit freien Bereichen zwischen zwei Stegen überlappen.

### AUFGABE DER ERFINDUNG

Es ist Aufgabe der vorliegenden Erfindung,
- eine Nano-Formgebungsstruktur,
- eine Folie mit mindestens einer Nano-Formgebungsstruktur sowie
- ein Verfahren zur Herstellung einer Nanostruktur
vorzuschlagen, welche oder welches ein alternatives Abformverfahren ermöglicht.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die vorliegende Erfindung beruht zunächst auf der Beobachtung, dass bisher zur Erzeugung von nanotechnischen Strukturen, die eine Nanogeometrie oder eine Oberfläche mit Unebenheiten im Bereich von wenigen Nanometern besitzen, eingesetzte Nano-Formgebungsstrukturen, sei es bei Nutzung des klassischen Stempelverfahrens oder sei es für das wälzende Abformen unter Einsatz einer Rolle oder Walze, möglichst starr ausgebildet waren. Jedwede elastische (oder plastische) Verformung der Nano-Formgebungsstruktur hat zur Folge gehabt, dass eine Ist-Nanogeometrie der hergestellten nanotechnischen Struktur abgewichen hat von einer Soll-Struktur. Waren Verformungen der Nano-Formgebungsstrukturen im Nanometerbereich während des Abformvorganges unvermeidbar, so mussten diese Verformungen a priori abgeschätzt werden. Bei der Herstellung der Negativ-Strukturgeometrie der Nano-Formgebungsstruktur mussten die a priori abgeschätzten Verformungen berücksichtigt werden, indem die Negativ-Strukurgeometrie der Nano-Formgebungsstruktur vor der Aufbringung der Normalkräfte von der gewünschten Nanogeometrie der herzustellenden nanotechnischen Struktur um das Ausmaß der a priori abgeschätzten Verformungen abgewichen haben. Erst mit Aufbringung der Normalkräfte und der auftretenden Verformungen hat sich dann die Formgebungsstruktur der gewünschten Nanogeometrie für die herzustellende nanotechnische Struktur (als Negativ-Strukturgeometrie) angenähert. Gemäß dem Stand der Technik wurden etwaige Verformungen der Nano-Formgebungsstruktur während des Abformvorgangs als unvermeidbare Nebeneffekte hingenommen, die zu unerwünschten Abweichungen der hergestellten Ist-Nanogeometrien gegenüber der Soll-Nanogeometrie der herzustellenden nanotechnischen Struktur geführt haben und/oder denen durch a priori abgeschätzte Verformungen berücksichtigende Auslegungsschritte bei der Gestaltung der Strukturgeometrie der Nano-Formgebungsstruktur Rechnung zu tragen war.

Die vorliegende Erfindung geht hier einen neuen Weg: Die vorliegende Erfindung nutzt bewusst eine gezielt gestaltete Verformbarkeit der Formgebungsstruktur. Erfindungsgemäß ist die Nano-Formgebungsstruktur von einer ersten Strukturgeometrie in eine kleinere zweite Strukturgeometrie verformbar. Hierbei umfasst die Erfindung eine zweite Strukturgeometrie, welche in beliebiger Hinsicht, beispielsweise hinsichtlich der Fläche oder hinsichtlich der Abmessungen, insbesondere einer Erstreckung quer zur Anpresskraft, kleiner ist als die erste Strukturgeometrie.

Um die Erfindung anhand eines einfachen, jedoch nicht beschränkenden Beispiels zu erläutern, kann die Nano-Formgebungsstruktur "atmen" von der ersten Strukturgeometrie zu der zweiten Strukturgeometrie, womit sich gezielt korrespondierende Abstände von Teilbereichen der Strukturgeometrie mit der Verformung der Nano-Formgebungsstruktur aneinander annähern können. Diese Annäherung kann hierbei je nach Verformung der Nano-Formgebungsstruktur in beliebige Richtungen erfolgen. Somit werden Abformkräfte zwischen der Nano-Formgebungsstruktur und dem Material der herzustellenden Nanostruktur nicht vorrangig oder allein in Richtung der Normalkraft erzeugt - vielmehr kann alternativ oder kumulativ eine Erzeugung von Flächenpressungen zwischen der Nano-Formgebungsstruktur und dem Material der herzustellenden Nanostruktur in beliebige Richtungen erfolgen, indem das Material zwischen sich annähernden korrespondierenden Teilbereichen der Strukturgeometrie verformt oder "verpresst" werden. Anders gesagt, erfolgt eine Verformung des Materials der herzustellenden Nanostruktur zumindest auch teilweise durch eine Verformung der Nano-Formgebungsstruktur.

Die erfindungsgemäße Ausgestaltung führt zu den folgenden möglichen (aber nicht zwingend erforderlichen) alternativen oder kumulativen Vorteilen:
- Die gegenüber der zweiten Strukturgeometrie vergrößerte erste Strukturgeometrie kann gezielt genutzt werden, um ein vereinfachtes Einbringen des Materials für die herzustellende Nanostruktur zu ermöglichen.
- Wird die erste Strukturgeometrie vollständig mit dem Material der herzustellenden Nanostruktur gefüllt, kann die Verformung der Nano-Formgebungsstruktur zu der kleineren zweiten Strukturgeometrie zu dem gewünschten "Verpressen" genutzt werden. Unter Umständen ist es sogar nicht einmal erforderlich, dass die erste Strukturgeometrie vollständig mit dem Material der Nanostruktur gefüllt wird, sofern ausreichend Material in der ersten Strukturgeometrie angeordnet wird, um dann nach der Verformung die zweite Strukturgeometrie vollständig zu füllen.
- Für die Verformung der Strukturgeometrie können gegenüber dem Stand der Technik veränderte Fliess- und Gleitprozesse zwischen den begrenzenden Wandungen der Strukturgeometrie und dem Material der herzustellenden Nanostruktur genutzt werden.
- Der Einsatzbereich von Neigungswinkeln der Begrenzungsflächen der Strukturgeometrie kann erfindungsgemäß gegenüber dem Stand der Technik erweitert werden.
- Während die Ausbildung von Hinterschneidungen für den Einsatz starrer Stempel oder Walzen nicht oder nur bedingt möglich war, können erfindungsgemäß auch Hinterschneidungen abgeformt werden. Um eine Entnahme der abgeformten Nanostruktur aus der Nano-Formgebungsstruktur zu ermöglichen, muss die Quererstreckung der Nanostruktur gemäß dem Stand der Technik mit zunehmenden Eintritt in die Nano-Formgebungsstruktur abnehmen - dies ist für die erfindungsgemäße Ausgestaltung nicht zwingend erforderlich, da nach Abformung in der zweiten Strukturgeometrie diese für die Entnahme der Nanostruktur verformt werden kann mit einer Öffnung der Strukturgeometrie, wodurch Hinterschneidungen freigegeben werden können.
- Unter Umständen kann der Verformungs-Freiheitsgrad auch für die Herstellung der Strukturgeometrie in der Nano-Formgebungsstruktur genutzt werden. Beispielsweise kann die Strukturgeometrie in einem verformten Zustand eines Rohlings der Nano-Formgebungsstruktur eingebracht werden, wobei in diesem verformten Zustand die Abmessungen der Strukturgeometrie vergrößert sind. Hierdurch kann der Eintritt eines Fertigungswerkzeugs oder eines für die Erzeugung der Strukturgeometrie genutzten Fluids ermöglicht oder verbessert werden. Es kann auch die Fertigung der Strukturgeometrie mit vergrößerten Abmessungen und damit mit einer erhöhten Genauigkeit erfolgen, während mit veränderter Verformung dann eine Verkleinerung der Strukturgeometrie erfolgen kann. Diese Verkleinerung ist u. U. nicht eine Schrumpfung in sämtliche Richtungen bei unveränderter Grundform - vielmehr verkleinert sich die Strukturgeometrie in unterschiedliche Richtungen u. U. unterschiedlich, wodurch sich eine veränderte Grundform ergeben kann.

Von der Erfindung umfasst sind durchaus Ausführungsformen, bei welchen die zweite Strukturgeometrie noch von der vorbestimmten Nanogeometrie der herzustellenden Nanostruktur abweicht. Durchaus möglich ist beispielsweise, dass in die Nano-Formgebungsstruktur noch eine Beschichtung, Einlegeelemente u. ä. eingebracht werden, deren Abmessungen zusätzlich zu der zweiten Strukturgeometrie die Nanogeometrie der herzustellenden Nanostruktur beeinflussen. Um lediglich ein weiteres Beispiel zu nennen, kann mit der Verformung in die zweite Strukturgeometrie und dem damit verbundenen Abformvorgang und Pressvorgang das Material der Nanostruktur komprimiert sein, während mit der Entnahme der Nanostruktur ein gewisses "Auffedern" der Nanostruktur erfolgt, so dass die letztendlich hergestellte Nanogeometrie abweicht von der zweiten Strukturgeometrie der Nano-Formgebungsstruktur. Für eine bevorzugte Ausführungsform der Erfindung entspricht allerdings die zweite Strukturgeometrie (zumindest teilweise) der vorbestimmten Nanogeometrie der herzustellenden Nanostruktur (als Negativ-Form).

Es versteht sich, dass die Kennzeichnung der Strukturgeometrien als "erste" und "zweite" Strukturgeometrie eine zeitliche Reihenfolge der Einnahme der jeweiligen Strukturgeometrie angeben kann, aber nicht muss.

Die Nano-Formgebungsstruktur kann in dem Zustand mit der ersten Strukturgeometrie eine Öffnung besitzen. Diese Öffnung kann beispielsweise genutzt werden, um das Material für die Nanostruktur selbst, eine zusätzliche Beschichtung, zusätzliche Formkörper und ähnliches in die Nano-Formgebungsstruktur einzubringen. Für diese Ausgestaltung der Erfindung besitzt die Nano-Formgebungsstruktur in dem anderen Verformungszustand, welcher die zweite Strukturgeometrie ausbildet, eine Öffnung, die kleiner ist als die Öffnung der ersten Strukturgeometrie. Somit wird das Material der herzustellenden Nanostruktur in der zweiten Strukturgeometrie eingeschlossen mit einer verkleinerten Öffnung, über welche das Material unter Umständen während des Abformens und Verpressens unerwünscht wieder austreten könnte. In alternativer Ausgestaltung besitzt die zweite Strukturgeometrie überhaupt keine Öffnung, so dass das Material der Nanostruktur vollständig und randgeschlossen in dieser eingeschlossen ist, womit unter Umständen ein verbessertes Verpressen des Materials erfolgen kann und auch eine Vorgabe der Strukturgeometrie der Nanostruktur (beispielsweise in einem Querschnitt derselben) über den gesamten Umfang erfolgen kann.

Grundsätzlich kann die Verformung der ersten Strukturgeometrie in die zweite Strukturgeometrie beliebig erfolgen mit gleichen oder unterschiedlichen Verformungen von Teilbereichen der Strukturgeometrie, gleichen oder unterschiedlichen Verformungsrichtungen der Teilbereiche, einzelnen Teilbereichen der Strukturgeometrie, welche nicht verformt werden, während andere Teilbereiche verformt werden u. ä.

In besonderer Ausgestaltung der Erfindung ist die erste Strukturgeometrie mit zwei kurvenförmigen (also beliebig geformten) Strukturschenkeln begrenzt, welche einen ersten Öffnungswinkel α₁ bilden. Hierbei korreliert die Kurvenform der Strukturschenkel mit der zu erzeugenden Nanogeometrie der herzustellenden Nanostruktur. Die Strukturschenkel bilden in der zweiten, verformten Strukturgeometrie einen kleineren zweiten Öffnungswinkel α₂ Diese Ausgestaltung der Erfindung soll an einem stark vereinfachten, nicht beschränkenden Beispiel erläutert werden: Die kurvenförmigen Strukturschenkel können verglichen werden mit Gesenkhälften an Pressbacken von Zangen. Mit Verschwenkung der Pressbacken aufeinander zu, womit sich der Öffnungswinkel der Pressbacken verändert, kann Material zwischen den beiden Gesenkhälften verpresst werden. Ähnlich wird mit Verringerung des Öffnungswinkels der Strukturschenkel im Rahmen der vorliegenden Erfindung zwischen den Strukturschenkeln das Material der herzustellenden Nanostruktur verpresst. Es versteht sich, dass (auch im Gegensatz zu dem erläuterten Verpressen mit der Zange) die Verschwenkung der Strukturschenkel nicht unbedingt über ein Gelenk mit fester Schwenkachse erfolgt. Vielmehr können hier die Strukturschenkel über einen elastischen Verformungsbereich oder einen Materialbereich der Nano-Formgebungsstruktur miteinander elastisch verbunden sein. Des Weiteren versteht sich, dass (ebenfalls abweichend zu der zu Vergleichszwecken herangezogenen Presszange) die Strukturschenkel selbst nicht starr ausgebildet sein müssen, sondern vielmehr mit der Verformung von dem ersten Öffnungswinkel α₁ zu dem zweiten Öffnungswinkel α₂ auch ihre Kurvenform verändern können.

Wie zuvor erwähnt, kann die zweite Strukturgeometrie geschlossen, also ohne Öffnung ausgebildet sein. Für die vorgenannten Strukturschenkel bedeutet dieses, dass diese in der zweiten Strukturgeometrie, vorzugsweise in einem Endbereich, welcher auf der der Schwenkachse oder dem Verbindungsbereich der Strukturschenkel abgewandten Seite der zweiten Strukturgeometrie angeordnet ist, aneinander zur Anlage kommen. In bevorzugter Ausgestaltung sind die Strukturschenkel mit Verbindungsbereichen ausgestattet, welche besonders für das Verschließen der zweiten Strukturgeometrie in diesem Bereich ausgebildet sind. Um lediglich einige mögliche Beispiele für die Ausgestaltung der Verbindungsbereiche zu nennen, kann ein Strukturschenkel im Verbindungsbereich mit einer Art Feder ausgestattet sein, welche in eine Nut in dem Verbindungsbereich des anderen Strukturschenkels formschlüssig in der Art Nut-Feder eingreift. Möglich ist auch die komplementäre Ausgestaltung der beiden Verbindungsbereiche mit einer Art Verzahnung, Unebenheiten u. ä.

Die Verformung von der ersten Strukturgeometrie zur zweiten Strukturgeometrie und/oder die Rückverformung von der zweiten Strukturgeometrie in die erste Strukturgeometrie kann beliebig sein. Beispielsweise kann die Nano-Formgebungsstruktur multistabil ausgebildet sein, so dass eine einmal eingenommene Strukturgeometrie ohne externe einwirkende Kräfte beibehalten bleibt. Die Verformung kann auch eine plastische Verformung sein. In bevorzugter Ausgestaltung handelt es sich bei der Verformung um eine elastische Verformung. Durchaus denkbar ist im Rahmen der vorliegenden Erfindung allerdings, dass die Verformung aus unterschiedlichen Verformungen der zuvor erläuterten Verformungsarten zusammengesetzt ist. Handelt es sich bei der Verformung um eine reine elastische Verformung, unterscheiden sich die erste Strukturgeometrie und die zweite Strukturgeometrie durch das Ausmaß der elastischen Verformung, also auch die zur Aufrechterhaltung der Strukturgeometrie erforderlichen äußeren Kräfte und die inneren Spannungen und Dehnungen der Nano-Formgebungsstruktur. Für eine besondere Ausgestaltung der Erfindung ist die Nano-Formgebungsstruktur in der ersten Strukturgeometrie oder in der zweiten Strukturgeometrie in einer Gleichgewichtslage, die somit ohne äußere Kräfte eingenommen wird und für welche keine inneren Spannungen vorhanden sind oder sich diese gegenseitig aufheben. Die Verformung kann durch die Anpresskraft zwischen Nano-Formgebungsstruktur und dem Material für die herzustellende Nanostruktur und/oder über zusätzliche Kräfte erzeugt oder aufgehoben werden.

In weiterer Ausgestaltung der Erfindung ist die Nano-Formgebungsstruktur mit einer Beschichtung versehen. Hierbei kann die Beschichtung permanent an der Nano-Formgebungsstruktur vorgesehen sein, so dass diese für den Abformvorgang mehrerer Nanostrukturen genutzt wird. Ebenfalls möglich ist, dass die Nano-Formgebungsstruktur für jeden Abformvorgang einer Nanostruktur jeweils mit einer Beschichtung versehen wird. Um lediglich einige Beispiele für eine derartige Beschichtung zu nennen, kann es sich bei der Beschichtung um eine AntihaftBeschichtung handeln, welche Gleitprozesse des Materials entlang der Strukturgeometrie während des Abformens oder Verpressens unterstützen kann und/oder die Entnahme der Nanostrukfur aus der Nano-Formgebungsstruktur vereinfachen kann. Ebenfalls möglich ist, dass es sich bei der Beschichtung um eine so genannte Opferbeschichtung handelt, welche beispielsweise nach dem Abformen der Nanostruktur in der Nano-Formgebungsstruktur zerstört oder aufgelöst wird, um die Entnahme der Nanostruktur aus der Nano-Formgebungsstruktur zu ermöglichen oder zu vereinfachen. Ebenfalls möglich ist, dass die hergestellte Nanostruktur mit der Beschichtung aus der Nano-Formgebungsstruktur entnommen wird, wobei die Beschichtung dann anschließend weiter an der Nanostruktur verbleibt oder anschließend beseitigt wird.

In weiterer Ausgestaltung der Erfindung verfügt die Nano-Formgebungsstruktur über einen Grundkörper, welcher mit einem Verformungsbereich ausgestattet ist. Mit Verformung des Verformungsbereichs erfolgt eine Verformung der Nano-Formgebungsstruktur von der ersten Strukturgeometrie zu der zweiten Strukturgeometrie (und/oder umgekehrt). Um lediglich einige Beispiele für eine Ausbildung des Verformungsbereichs zu nennen, kann es sich hier um eine Art Scharnier oder ein Gelenk mit einer definierten Schwenk- oder Verformungs-Achse handeln. Ebenfalls möglich ist, dass in dem Verformungsbereich ein Material eingesetzt ist, welches eine größere Elastizität besitzt als andere Teilbereiche des Grundkörpers. Alternativ oder kumulativ kann der Verformungsbereich mit einer Materialschwächung ausgebildet werden, in dem beispielsweise eine Wanddicke in dem Verformungsbereich verringert ist. Ebenfalls möglich ist, dass in dem Verformungsbereich gezielt Poren, Ausnehmungen o. ä. vorgesehen sind, um die Steifigkeit in dem Verformungsbereich zu reduzieren.

Die Nano-Formgebungsstruktur kann mittels einer beliebigen Komponente bereitgestellt werden. Gemäß einer erfindungsgemäßen Lösung wird vorgeschlagen, die Nano-Formgebungsstruktur mit einer Folie, insbesondere einer Kunststofffolie, zu bilden. Vorzugsweise kann eine derartige Folie mit mehreren räumlich hierauf verteilten Nano-Formgebungsstrukturen, beispielsweise mit in Reihe hintereinander und/oder nebeneinander angeordneten Nano-Formgebungsstrukturen ausgestattet werden. Eine derartige Folie kann aus einem oder mehreren beliebigen Materialien hergestellt sein, wobei auch möglich ist, dass die Folie mehrschichtig ausgebildet ist. In besonderer Ausgestaltung der Erfindung ist ein Grundkörper der Folie mit einer PDMS-Folie, also einer Folie aus Polydimethylsiloxan, gebildet.

Bei der Nano-Formgebungsstruktur, wie diese zuvor erläutert worden ist, insbesondere mit der Strukturierung der Oberfläche zwecks Bildung der ersten Strukturgeometrie und der zweiten Strukturgeometrie, kann eine Strukturierung der Nano-Formgebungsstruktur in einem Abformverfahren hergestellt sein, wobei ein Form-Master eingesetzt ist. Hierbei handelt es sich um einen "positiven" Form-Master. Dieser positive Form-Master wird zur Abformung der Nano-Formgebungsstruktur als Negativ-Form genutzt, die dann wiederum als Positiv-Form an die Nanostruktur übertragen wird. Hierbei kann die Strukturgeometrie des Form-Masters der ersten oder zweiten Strukturgeometrie der Nano-Formgebungsstruktur entsprechen, wobei aber durchaus auch möglich ist, dass die von dem Form-Master abgeformte Strukturgeometrie erst mit einer Verformung in die erste Strukturgeometrie und die zweite Strukturgeometrie der Nano-Formgebungsstruktur überführt wird. Für die Herstellung des Form-Masters können beliebige Herstellverfahren für einen Form-Master eingesetzt werden, wie diese auch vielfältig aus dem Stand der Technik bekannt sind. Beispielsweise kann die Herstellung des Form-Masters als starrer Stempel oder als Rolle oder Walze erfolgen, wie dies für den eingangs genannten Stand der Technik oder anderweitigen Stand der Technik beschrieben worden ist.

Von der Erfindung umfasst sind sowohl Ausführungsformen, bei welchen das Abformverfahren unter Einsatz des Form-Masters erfolgt, indem ein Rohling der Nano-Formgebungsstruktur mit dem Form-Master in unverformtem Zustand des Rohlings zugeführt wird als auch Ausführungsformen, bei welchen die Zuführung des Rohlings in verformtem Zustand erfolgt.

Ein weiterer Aspekt der Erfindung widmet sich einem Verfahren zur Herstellung einer Nanostruktur, welche eine vorbestimmte Nanogeometrie besitzen sollen. Gemäß diesem Verfahren erfolgt in einem ersten Verfahrensschritt eine Bereitstellung einer Nano-Formgebungsstruktur, wie diese zuvor beschrieben ist, wobei sich die bereitgestellte Nano-Formgebungsstruktur in der ersten Strukturgeometrie befindet oder die Nano-Formgebungsstruktur über eine geeignete Verformung in die erste Strukturgeometrie überführt wird. In einem anschließenden Verfahrensschritt erfolgt ein Einbringen von Material für die herzustellende Nanostruktur in die erste Strukturgeometrie, wobei dies durch eine Öffnung der ersten Strukturgeometrie erfolgen kann. In einem anschließenden Verfahrensschritt erfolgt eine Verformung der Nano-Formgebungsstruktur von der ersten Strukturgeometrie in die zweite, kleinere Strukturgeometrie. Vorzugsweise erfolgt während der Verformung der Nano-Formgebungsstruktur von der ersten Strukturgeometrie in die zweite Strukturgeometrie ein Verformen oder Verpressen des Materials für die herzustellende Nanostruktur. In einem anschließenden Verfahrensschritt wird eine derart hergestellte Nanostruktur aus der Nano-Formgebungsstruktur entnommen. Es versteht sich, dass das erläuterte erfindungsgemäße Verfahren Einsatz finden kann mit einer Nano-Formgebungsstruktur für die separate Fertigung einer einzigen Nanostruktur, während ebenfalls möglich ist, dass, insbesondere mit einer Folie der zuvor erläuterten Art, gleichzeitig mehrere Nanostrukturen hergestellt werden. Möglich ist, dass sich an die genannten Verfahrensschritte weitere Verfahrensschritte anschließen, in welchen auch eine weitere Beeinflussung der Geometrie der Nanostruktur erfolgen kann.

In weiterer Ausgestaltung eines erfindungsgemäßen Verfahrens erfolgt nach dem Verformen der Nano-Formgebungsstruktur von der ersten Strukturgeometrie in die kleinere zweite Strukturgeometrie (mit einem Abformen und Verpressen des Materials für die herzustellende Nanostruktur) eine zumindest teilweise Rückverformung von der zweiten Strukturgeometrie zu der ersten Strukturgeometrie, womit die Strukturgeometrie wieder vollständig oder etwas geöffnet wird. Nach dieser Rückverformung kann dann ein Entnehmen der so hergestellten Nanostruktur aus der Nano-Formgebungsstruktur erfolgen. Das Öffnen der Strukturgeometrie durch die Rückverformung hat zur Folge, dass sich unter Umständen bereits mit dieser Rückverformung das Material der Nanostruktur von der Nano-Formgebungsstruktur zumindest teilweise ablöst. Des Weiteren kann durch das Öffnen der Strukturgeometrie die Entnahme der Nanostruktur vereinfacht werden. Auch kann die Entnahme mit dem Öffnen der Strukturgeometrie erst ermöglicht werden, wenn beispielsweise eine Nanostruktur mit Hinterschneidungen in der Strukturgeometrie abgeformt worden ist.

Für einen Vorschlag der Erfindung erfolgt die Herstellung einer Nano-Formgebungsstruktur, indem eine Strukturierung der Nano-Formgebungsstruktur durch ein maskengebendes Verfahren erfolgt. Um lediglich einige nicht beschränkende Beispiele zu nennen, handelt es sich bei dem maskengebenden Verfahren um eine Fotolithografie, eine Elektronenstrahllithografie oder eine Ionenstrahllithografie.

In alternativer Ausgestaltung der Erfindung erfolgt die Herstellung einer Nano-Formgebungsstruktur oder einer Folie mittels einer 2-Photonen-Lithographie, sodass nicht ein Abformen, beispielsweise über ein maskengebendes Verfahren erfolgt, sondern ein direktes "Schreibeverfahren" eingesetzt wird.

Es versteht sich, dass auch kumulativ die vorgenannten unterschiedlichen Verfahren zur Strukturierung der Nano-Formgebungsstruktur Einsatz finden können.

Ein weiterer Aspekt der Erfindung widmet sich den Möglichkeiten zur Herbeiführung der Verformung und Rückverformung der Nano-Formgebungsstruktur. Hier sind grundsätzlich beliebige Ausgestaltungen denkbar. Gemäß einem Vorschlag der Erfindung erfolgt das Verformen und/oder das Rückverformen unter Anlegen der Nano-Formgebungsstruktur an einen konturierten Verformungskörper, welcher somit eine exakte gewünschte Grundform der Nano-Formgebungsstruktur nach dem Anlegen vorgeben kann, was zur Erhöhung der Präzision der Verformung und damit der herbeigeführten ersten und/oder zweiten Strukturgeometrie beitragen kann. Über die Konturgestaltung des Verformungskörpers kann des Weiteren auf einfache Weise Einfluss auf das Verformungsverhalten, die sich ergebende Strukturgeometrie, die Dehnungen und Spannungen und letztendlich auch die während des Abformens wirkenden Spannungen und Verpresskräfte genommen werden.

Während grundsätzlich beliebige Verformungskörper, auch der Einsatz mehrerer Teil-Verformungskörper, denkbar ist, kann für einen weiteren Vorschlag der Erfindung der Verformungskörper auch als Walze ausgebildet sein. Ein Anlegen der Nano-Formgebungsstruktur an einen Teilumfangsbereich der Walze kann erfolgen durch Aufbringung von Zugkräften auf die Nano-Formgebungsstruktur. Um dieses anhand eines einfachen, nicht beschränkenden Beispiels zu erläutern, kann die Nano-Formgebungsstruktur von einer Folie ausgebildet sein, die in der Art eines Trums eines Förderbandes gegen eine Walze gespannt wird, womit sich die Folie an den Teilumfangsbereich der Walze anlegt. Somit kann über die Zugkräfte der Nano-Formgebungsstruktur, insbesondere der Folie, die Anpresskraft zwischen Walze und der Nano-Formgebungsstruktur beeinflusst werden. Damit kann die Herbeiführung der Verformung der Folie in Abhängigkeit der Zugkräfte, die die Folie gegen die Walze ziehen, unabhängig von einer etwaigen Anpresskraft zwischen der Nano-Formgebungsstruktur und dem Material für die herzustellende Nanostruktur beeinflusst werden.

In alternativer oder kumulativer Ausgestaltung des erfindungsgemäßen Verfahrens kann das Anlegen der Nano-Formgebungsstruktur an den Verformungskörper durch Aufbringen von Kräften erfolgen, welche zumindest eine Komponente besitzen, die vertikal zur Flächenormalen des Verformungskörpers orientiert sind. Um hier lediglich ein Beispiel zu nennen, können derartige Kräfte durch Ansaugen oder fluidisches Anpressen an den Verformungskörper erzeugt werden. So kann insbesondere der Verformungskörper mit Bohrungen oder Poren im Bereich seiner Mantelfläche ausgestattet sein, über welche ein Unterdruck die Nano-Formgebungsstruktur ansaugen kann.

Während durchaus möglich ist, dass eine oder mehrere Nanostruktur/Nanostrukturen jeweils unter Einsatz einer Nano-Formgebungsstruktur oder eine Folie separat hergestellt wird/werden, schlägt die Erfindung in weiterer Ausgestaltung vor, dass eine Herstellung einer Vielzahl von Nanostrukturen mittels derselben Nano-Formgebungsstruktur oder denselben Nano-Formgebungsstrukturen in einem endlosen Verfahren erfolgt. Dies kann beispielsweise wie zuvor erläutert erfolgen, wenn eine Folie in der Art eines Förderbandes eine endlose Struktur bildet, die ohne signifikante Unterbrechung mehrfach in einem Arbeitsbereich in Wirkverbindung mit Material für mehrere herzustellende Nanostrukturen gebracht wird.

Möglich ist, dass das Material für die herzustellende Nanostruktur an sich oder, unter Umständen mit einer entsprechenden Verfestigung, mit Abschluss der Verformung zu der zweiten Strukturgeometrie formstabil ist. Möglich ist auch, dass vor dem Entnehmen der hergestellten Nanostruktur aus der Nano-Formgebungsstruktur ein Härten des Materials der Nanostruktur erfolgt, um die Formstabilität erst herbeizuführen oder diese noch zu fördern. Ein derartiges Härten des Materials kann beispielsweise erfolgen durch
- eine UV-Bestrahlung,
- eine Trocknung des Materials,
- gezieltes Herbeiführen einer chemischen Reaktion des Materials der Nanostruktur, unter Umständen durch Zuführung eines Reaktionsmittels, und/oder
- thermisches Einwirken.

Das Material der Nano-Formgebungsstruktur ist hierbei an die mechanischen, physikalischen oder chemischen Anforderungen des Härtungsprozesses angepasst. So ist beispielsweise bei einem Aushärten mittels UV-Bestrahlung vorzugsweise das Material der Nano-Formgebungsstruktur UV-transparent, während für ein thermisches Aushärten das material der Nano-Formgebungsstruktur bei den gewählten Temperaturen nicht schmelzen darf.

Von der vorliegenden Erfindung umfasst ist auch eine Variante des erfindungsgemäßen Verfahrens, bei welchem vor dem Einbringen des Materials für die herzustellende Nanostruktur in die Nano-Formgebungsstruktur eine Beschichtung, beispielsweise die zuvor erläuterte Opferbeschichtung und/oder eine Antihaftbeschichtung, in die Nano-Formgebungsstrutur eingebracht wird.

Die Erfindung schlägt in einer weiteren Ausgestaltung vor, dass das Einbringen des Materials für die herzustellende Nanostruktur oder der Beschichtung durch Einsprühen, Eintauchen, Bestreichen, Fließen, Bedampfen oder Eindrücken erfolgt.

Möglich ist, dass mehrere Nanostrukturen nicht gemeinsam und miteinander stoffschlüssig verbunden hergestellt werden. Allerdings umfasst die Erfindung auch eine Ausgestaltungsform, bei welcher mehrere Nanostrukturen zunächst gemeinsam und stoffschlüssig miteinander verbunden hergestellt werden. Für diesen Fall kann nach der gemeinsamen Herstellung eine Vereinzelung der mehreren, miteinander stoffschlüssig verbundenen Nanostrukturen erfolgen. Um lediglich einige nicht beschränkende Beispiele zu nennen, kann die Vereinzelung durch Brechen, Ätzen, Ultraschall-Einwirkung oder Erwärmen erfolgen.

Das Herauslösen der hergestellten Nanostruktur aus der Nano-Formgebungsstruktur kann auf beliebige Weise erfolgen. Im einfachsten Fall fällt die Nanostruktur mit Öffnung der Strukturgeometrie aus der Nano-Formgebungsstruktur heraus oder wird mittels eines geeigneten Entnahmeorgans aus dieser entnommen. In bevorzugter Ausgestaltung der Erfindung erfolgt das Herauslösen der Nanostruktur
- unter Einwirken von Ultraschall,
- durch einen Fluidstrom, beispielsweise durch Anblasen der Nanostruktur mit einem Fluid- oder Luftstrom von außen,
- durch Herausdrücken der Nanostruktur aus der Strukturgeometrie durch einen Fluid- oder Luftstrom, der durch bodenseitige Austrittsöffnungen der Nano-Formgebungsstruktur heraustritt,
- durch eine Beschichtung wie eine Opferbeschichtung wie zuvor erläutert und/oder
- durch ein Herausdrücken der Nanostruktur mittels einer gezielten Formänderung der Nano-Formgebungsstruktur.

Möglich ist auch, dass das Herauslösen erzielt wird mit einem Aufquellen der Nano-Formgebungsstruktur für die Herbeiführung einer Formänderung oder mit einem Ausdehnen innerer Kanäle oder Luftkammern oder Poren mit einer Befüllung derselben mit einem Fluid unter Druck.

In weiterer Ausgestaltung des erfindungsgemäßen Verfahrens wird mit dem Verformen der Nano-Formgebungsstruktur von der ersten Strukturgeometrie zu der zweiten Strukturgeometrie überflüssiges Material für die herzustellende Nanostruktur aus einer Öffnung gedrückt, wobei es sich bei dieser Öffnung um die Öffnung handeln kann, durch welche das Material eingebracht worden ist oder eine anderweitige, zusätzliche Öffnung. Durch das Herauspressen des überschüssigen Materials kann auf einfache Weise gewährleistet werden, dass die richtige Menge des Materials in der Nano-Formgebungsstruktur angeordnet ist.

Eine Beseitigung überschüssigen Materials von der Nano-Formgebungsstruktur, insbesondere auch nach dem zuvor beschriebenen Drücken überschüssigen Materials aus einer Öffnung, kann auf beliebige Weise erfolgen. In weiterer Ausgestaltung der Erfindung erfolgt die Beseitigung des überschüssigen Materials durch ein Lösungsmittel, einen mechanischen Schaber, die Übertragung auf ein Abnahmeelement, insbesondere eine weitere Folie oder Walze, durch Ätzen und/oder durch Einwirken von Ultraschall.

Vorteilhafte Weiterbildungen der Erfindung ergeben sich aus den Patentansprüchen, der Beschreibung und den Zeichnungen, insbesondere den dargestellten Geometrien und den relativen Abmessungen mehrerer Bauteile zueinander sowie derer relativer Anordnung und Wirkverbindung. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Längsschnitt durch eine erste Ausgestaltungsform einer Nano-Formgebungsstruktur in einer ersten Strukturgeometrie.
- **Fig. 2**: zeigt die Nano-Formgebungsstruktur gemäß Fig. 1 in einer zweiten Strukturgeometrie.
- **Fig. 3**: zeigt eine weitere erfindungsgemäße Nano-Formgebungsstruktur in einem Längsschnitt in einer zweiten Strukturgeometrie.
- **Fig. 4**: zeigt die Nano-Formgebungsstruktur gemäß Fig. 3 in einer ersten Strukturgeometrie.
- **Fig. 5**: zeigt eine weitere Ausgestaltung einer Nano-Formgebungsstruktur in einem Längsschnitt in einer ersten Strukturgeometrie.
- **Fig. 6**: zeigt eine räumliche Darstellung einer Folie mit mehreren parallelen Reihen, in denen jeweils mehrere Nano-Formgebungsstrukturen angeordnet sind.
- **Fig. 7**: zeigt in einem Längsschnitt die Überführung der Nano-Formgebungsstrukturen der Folie gemäß Fig. 6 von der ersten Strukturgeometrie in die zweite Strukturgeometrie und umgekehrt im Anlagebereich an eine Förderwalze mit einem ersten Durchmesser.
- **Fig. 8**: zeigt in einem Längsschnitt die Überführung der Nano-Formgebungsstrukturen der Folie gemäß Fig. 6 von der ersten Strukturgeometrie in die zweite Strukturgeometrie und umgekehrt im Anlagebereich an eine Förderwalze mit einem zweiten Durchmesser, welcher größer ist als der erste Durchmesser der Förderwalze gemäß Fig. 7.
- **Fig. 9**: zeigt in einem Längsschnitt eine Überführung von Nano-Formgebungsstrukturen von einer zweiten Strukturgeometrie zu einer ersten Strukturgeometrie und umgekehrt in einem Anlagebereich an eine Förderwalze.
- **Fig. 10**: zeigt ein zusätzliches Verpressen der Nano-Formgebungsstruktur im Bereich einer Förderwalze.
- **Fig. 11 bis 14**: zeigen unterschiedliche Ausgestaltungen von Folien mit Nano-Formgebungsstrukturen und deren Überführung von einer ersten Strukturgeometrie in eine zweite Strukturgeometrie und umgekehrt durch Anpressen der Folie an einen Verformungskörper mittels Unterdruck.
- **Fig. 15 und 16**: zeigen unterschiedliche Herstellungsverfahren für Nano-Formgebungsstrukturen in einer Folie.
- **Fig. 17**: zeigt einen Form-Master, welcher zur Herstellung von Nano-Formgebungsstrukturen verwendet werden kann.
- **Fig. 18 und 19**: zeigen das Abformen des Form-Masters gemäß Fig. 17 in einer Folie zur Bildung einer Nano-Formgebungsstruktur.
- **Fig. 20**: zeigt ein kontinuierliches Abformen eines Form-Masters mit mehreren Strukturgeometrien in einer Folie.
- **Fig. 21 und 22**: zeigen ein Herstellungsverfahren für eine Folie mit mindestens einer Nano-Formgebungsstruktur unter Herstellung einer Lackschicht mit einem Form-Master, Trennen des Form-Masters und Verbinden der Lackschicht mit einer Tragschicht.
- **Fig. 23**: zeigt eine Folie und eine Nano-Formgebungsstruktur mit einer Beschichtung.
- **Fig. 24 bis 26**: zeigen die Ausstattung einer Folie im Umgebungsbereich der Nano-Formgebungsstruktur mit Ausnehmungen, Bohrungen, Poren und Kanälen für eine Materialschwächung, Bildung eines Verformungsbereichs und/oder eine Druckbeaufschlagung mit einem Fluid.
- **Fig. 27**: zeigt die Ausstattung einer Folie im Umgebungsbereich einer Nano-Formgebungsstruktur mit einem Scharnier und/oder mit Materialschwächungen.
- **Fig. 28**: zeigt die Ausstattung einer Nano-Formgebungsstruktur mit Nut und Feder in Verbindungsbereichen zum Verschließen einer Öffnung.
- **Fig. 29 bis 31**: zeigen unterschiedliche kontinuierliche Herstellungsverfahren für Nanostrukturen.
- **Fig. 32 bis 34**: zeigen ein diskontinuierliches Herstellungsverfahren für Nanostrukturen.
- **Fig. 35**: zeigt das sukzessive Befüllen einer Nano-Formgebungsstruktur mit unterschiedlichen Beschichtungen und Schichten des Materials für die Nanostruktur.
- **Fig. 36 und 37**: zeigen das Auspressen überschüssigen Materials aus einer Nano-Formgebungsstruktur.
- **Fig. 38**: zeigt das Entfernen überschüssigen Materials mittels eines Schabers.
- **Fig. 39**: zeigt das Entfernen überschüssigen Materials mittels einer anhaftenden zusätzlichen Folie.
- **Fig. 40**: zeigt eine zusätzliche Formgebung mittels einer Heizeinrichtung.
- **Fig. 41**: zeigt eine zusätzliche Beeinflussung des Materials der Nanostruktur durch Anlegen eines elektrischen Feldes.
- **Fig. 42**: zeigt die zusätzliche Beeinflussung des Materials der Nanostruktur mit dem Anlegen eines magnetischen Feldes.
- **Fig. 43**: zeigt eine zusätzliche Formgebung für die Nanostruktur durch veränderte Druckbeaufschlagung mindestens einer Ausnehmung, Bohrung oder von Poren im Umgebungsbereich der Nano-Formgebungsstruktur.
- **Fig. 44**: zeigt die Veränderung des Materials der Nanostruktur durch Reaktion unterschiedlicher Materialbereiche.
- **Fig. 45**: zeigt die Veränderung des Materials der Nanostruktur durch Erzeugung einer Zentrifugalkraft auf die Nanostruktur.

### FIGURENBESCHREIBUNG

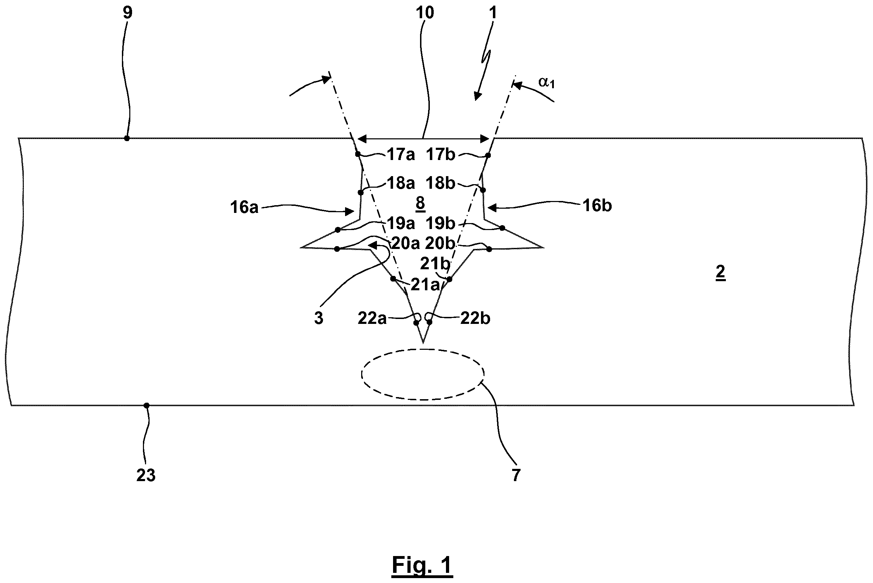

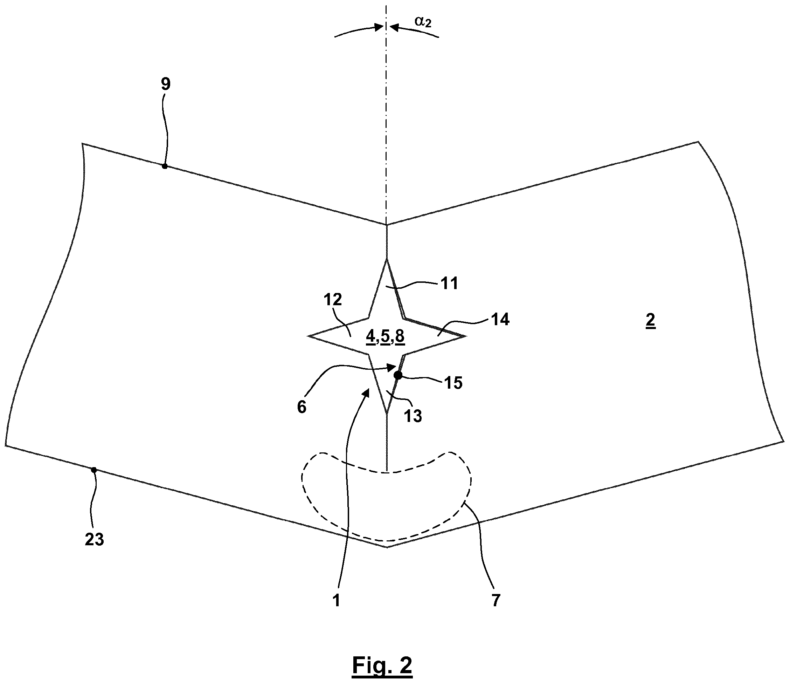

In Fig. 1 und 2 ist eine Nano-Formgebungsstruktur 1 dargestellt, welche hier von einer Folie 2 ausgebildet ist, von welcher in den Fig. 1 und 2 lediglich ein Teil-Längsabschnitt mit einer Schnittführung in Längs- sowie Dickenrichtung der Folie 2 dargestellt ist. Die Folie 2 kann somit mehrere Nano-Formgebungsstrukturen 1 besitzen, welche nebeneinander und/oder hintereinander angeordnet sein können oder beliebig räumlich über die Folie 2 verteilt sein können.

In **Fig. 1** ist die Nano-Formgebungsstruktur in einer ersten Strukturgeometrie 3 dargestellt, welche nicht mit Material 4 für eine Nanostruktur 5 gefüllt ist. Hingegen zeigt **Fig. 2** eine mit Material 4 für eine Nanostruktur 5 gefüllte Nano-Formgebungsstruktur 1 in einer zweiten Strukturgeometrie 6. Die Veränderung der ersten Strukturgeometrie 3 in die zweite Strukturgeometrie 6 ist durch eine elastische Verformung des Verformungsbereichs 7 herbeigeführt worden.

Die Nano-Formgebungsstruktur 1 ist mit einer Ausnehmung 8 aus einer hier ebenen Oberfläche 9 der Folie 2 gebildet. Die Größe der Ausnehmung 8 ist in der ersten Strukturgeometrie 3 gemäß Fig. 1 größer als für die zweite Strukturgeometrie 6 gemäß Fig. 2. In der ersten Strukturgeometrie 3 ist die Ausnehmung 8 in dem dargestellten Schnitt randoffen mit einer Öffnung 10, welche die Oberfläche 9 fortsetzt, während für die zweite Strukturgeometrie 6 gemäß Fig. 2 die Ausnehmung 8 im dargestellten Schnitt randgeschlossen ist. Die zweite Strukturgeometrie 6 begrenzt die Ausnehmung 8 sternförmig mit vier gleichförmig verteilten Zacken 11-14 gleicher Größe. Entsprechend besitzt die Nanostruktur 5 eine sternförmige Nanogeometrie 15. In der aus Figur 1 nicht ersichtlichen dritten Dimension ist die Nano-Formgebungsstruktur 1 beliebig ausgebildet, bspw. eben oder mit zwei oder mehr Zacken.

In der ersten Strukturgeometrie gemäß Fig. 1 verfügt die Nano-Formgebungsstruktur 1 über zwei symmetrisch zu der Vertikalachse oder der Längsachse der Ausnehmung 8 orientierte Strukturschenkel 16a, 16b. Die Strukturschenkel 16a, 16b verfügen jeweils über die folgenden Teilbereiche, welche in den Fig. mit einem Buchstaben "a" für den Strukturschenkel 16a und "b" für den Strukturschenkel 16b gekennzeichnet sind:
- einen Verbindungsbereich 17a, 17b;
- einen Zackenbereich 18a, 18b;
- Zackenbereiche 19a, 19b;
- Zackenbereiche 20a, 20b;
- Zackenbereiche 21 a, 21 b;
- Spaltbereiche 22a, 22b.

In erster grober Näherung ist die Ausnehmung 8 in dem dargestellten Schnitt U- oder V-förmig. Hierbei sind die Seitenschenkel des U unter leichter Abwinklung und Öffnung nach außen jeweils mit einem Verbindungsbereich 17 und einem Zackenbereich 18 gebildet, an welche in Drei-Uhr-Position quer zur Längsachse der Ausnehmung 8 sich erstreckende Zackenbereiche 19, 20 anschließen. Der Bodenbereich der Ausnehmung 8 bzw. der Querschenkel des U ist hier mit den Zackenbereichen 21 sowie den Spaltbereichen 22 gebildet, wobei Paare von Zackenbereichen 21 und Spaltbereichen 22 leicht nach außen öffnend abgewinkelt ausgebildet sind. Für das dargestellte Ausführungsbeispiel sind die Verbindungsbereiche 17, die Zackenbereiche 18-21 sowie die Spaltbereiche 22 geradlinig ausgebildet mit Knicken im Übergangsbereich zwischen diesen, wobei auch Abrundungen der Übergänge und beliebige andere kurvenförmige Verläufe der Bereiche 17-22 durchaus möglich sind oder einzelne Bereiche entfallen können oder ergänzende Bereiche vorhanden sein können.

Der Verformungsbereich 7 ist zwischen dem Boden der Ausnehmung 8, hier der Spitze zwischen den Zackenbereichen 22a, 22b, und einer Unterseite 23 der Folie 2 gebildet. Nach Füllen der Ausnehmung 8 der ersten Strukturgeometrie 3 gemäß Fig. 1 mit dem Material 4 für die Nanostruktur 5 erfolgt unter Verformung des Verformungsbereichs 7 die Herbeiführung der zweiten Strukturgeometrie 6, womit sich die Strukturschenkel 16a, 16b mit den Verbindungsbereichen 17, den Zackenbereichen 18-21 sowie den Spaltbereichen 22 aneinander annähern.

In der zweiten Strukturgeometrie 6 gemäß Fig. 2 sind die Verbindungsbereiche 17a, 17b aneinander zur Anlage gekommen, womit die Öffnung 10 der Ausnehmung 8 nach außen verschlossen ist. Gleichzeitig kommen die Spaltbereiche 22a, 22b aneinander zu Anlage. In diesem Fall vereinigen sich die Zackenbereiche 18a, 18b zu dem Zacken 11, während der Zacken 12 mit den Zackenbereichen 19a, 20a, der Zacken 14 mit den Zackenbereichen 19b, 20b und der Zacken 13 mit den Zackenbereichen 21 a, 21 b gebildet ist. Für die Herbeiführung der zweiten Strukturgeometrie 6 sind die Oberfläche 9 und die Unterfläche 23 nicht mehr eben ausgebildet, sondern abgewinkelt (oder für andere Ausführungsbeispiele gekrümmt).

In Fig. 1 ist ein Winkel α₁ markiert, welcher sich zwischen den beiden Strukturschenkeln 16a, 16b ergibt. Hierbei kann es sich beispielsweise um den Winkel zwischen den beiden Spaltbereichen 22a, 22b, einem Winkel zwischen einem gemittelten Konturverlauf der beiden Strukturschenkel 16a, 16b oder einer Verbindungsgeraden beliebiger Teilbereiche der Strukturschenkel 16a, 16b handeln. Wie in Fig. 2 zu erkennen ist, hat sich der Öffnungswinkel α₁ der Strukturschenkel 16a, 16b mit der Herbeiführung der zweiten Strukturgeometrie 6 verkleinert auf einen Öffnungswinkel α₂, welcher für das dargestellte Ausführungsbeispiel sogar Null ist.

Mit der Herbeiführung der zweiten Strukturgeometrie 6 wird das Material 4 für die Nanostruktur 5 insbesondere zwischen den Zackenbereichen 18-21 verpresst, da sich die zugeordneten Zackenbereiche 18a, 18b; 21a, 21b aneinander annähern, während sich die Zacken 12, 14 u. U. auch ohne Verformung der Zacken 12, 14 selbst aneinander annähern. Hiermit kann überschüssiges Material aus der sich mit Verringerung des Öffnungswinkels α verkleinernden Öffnung 10 herausgepresst werden.

Bei der Folie 2 handelt es sich insbesondere um eine PDMS-Folie. Ein geeignetes Material für die Folie 2 (oder ein anderes Material für eine nicht folienartige Nano-Formgebungsstruktur 1) muss den mechanischen, physikalischen und chemischen Ansprüchen genügen. Eingesetzt werden kann ein einziges, homogenes Material. Ebenfalls möglich ist, dass ein Mehrschicht-Material eingesetzt wird, insbesondere unterschiedlich harte PDMS-Schichten. Weiterhin möglich ist, dass ein Mehrschichtsystem eingesetzt wird mit unterschiedlichen Materialien, beispielsweise einer Schicht einer PDMS-Folie sowie einer Schicht PTFE-Folie.

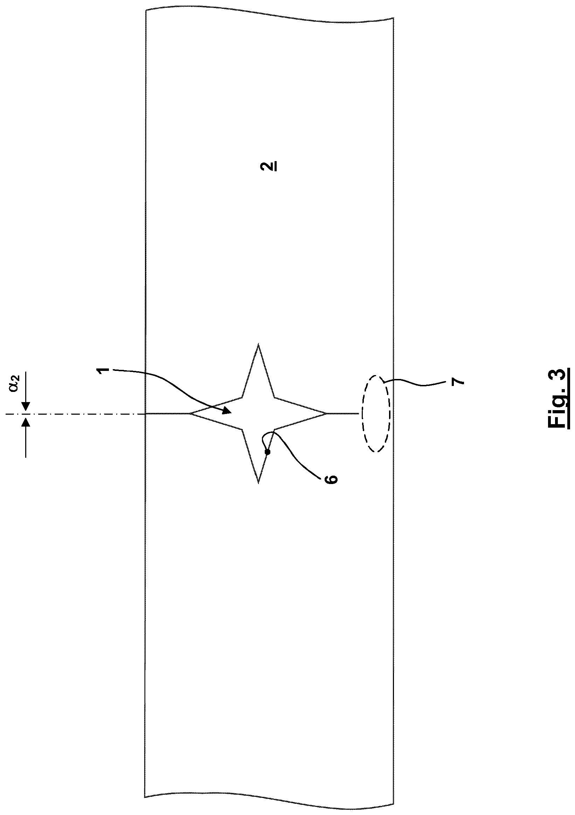

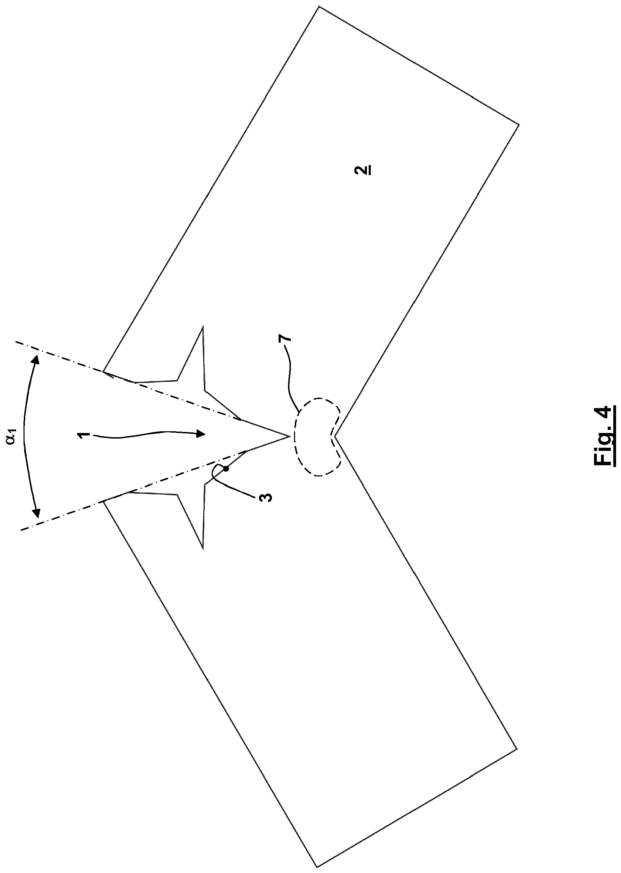

Für das in den Fig. 1 und 2 dargestellte Ausführungsbeispiel ist der Verformungsbereich 7 für die erste Strukturgeometrie 3 entspannt, also nicht elastisch verformt, während dieser in der zweiten Strukturgeometrie 6 elastisch verspannt ist. Hingegen zeigen **Fig. 3** **und** **4** eine Ausführungsform der Nano-Formgebungsstruktur 1, bei welcher der Verformungsbereich 7 in der zweiten Strukturgeometrie 6 gemäß Fig. 3 nicht verspannt ist, während bei der ersten Strukturgeometrie 6 gemäß Fig. 4 der Verformungsbereich 7 elastisch verformt ist.

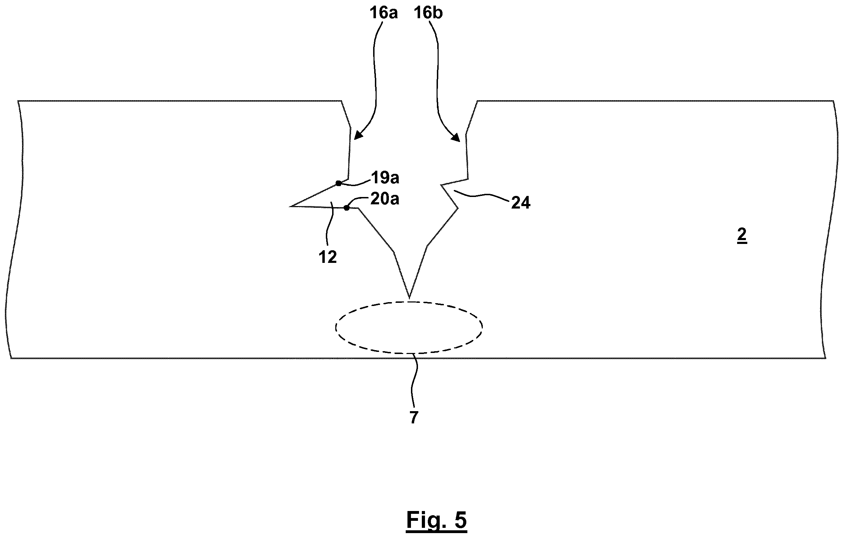

Während die Fig. 1 bis 4 Strukturgeometrien 3, 6 gezeigt haben, welche symmetrisch zu einer Längsachse der Ausnehmung 8 sind mit entsprechend spiegelsymmetrischer Ausgestaltung der Strukturschenkel 16a, 16b, zeigt **Fig. 5** eine nicht symmetrische Ausgestaltung der Ausnehmung 8 und der zugeordneten Strukturgeometrien 3, 6 mit nicht spiegelsymmetrischen Strukturschenkeln 16a, 16b. Für die Ausführungsform gemäß Fig. 5 bildet in dem Strukturschenkel 16a der Zacken 12 bzw. bilden die Zackenbereiche 19a, 20a Ausnehmungen oder Vertiefungen des Strukturschenkels 16a. Über eine entsprechende Vertiefung verfügt der Strukturschenkel 16b nicht - vielmehr ist hier ein Vorsprung in der Art eines Zackens 24 gebildet, welcher in der zweiten Strukturgeometrie 6 in die Ausnehmung 8 hineinragt bzw. diese verjüngt.

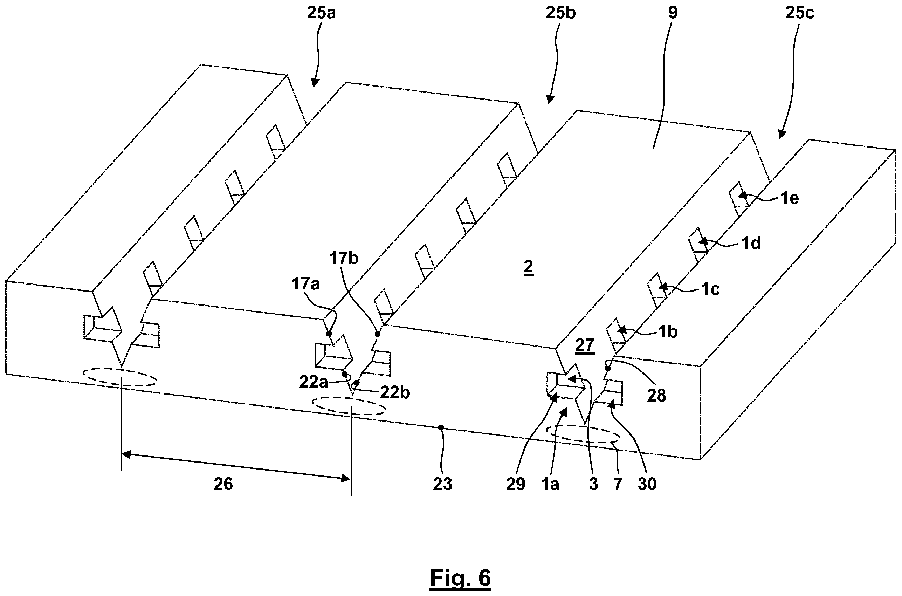

**Fig. 6** zeigt eine Folie 2, welche über mehrere Reihen 25a, 25b, 25c verfügt, die parallel zueinander jeweils einen Abstand 26 voneinander besitzen. Möglich ist abweichend zu Fig. 6 auch, dass die Reihen schräg zu einer Längsachse der Folie 2 oder der Verformungsrichtung orientiert sind, wobei die Reihen parallel oder nicht parallel zueinander orientiert sein können. Hierdurch kann erreicht werden, dass die Reihen der Länge nach sukzessive und nicht vollständig plötzlich geschlossen werden, wodurch bspw. ein Herauspressen überschüssigen Materials verbessert werden kann. Jede Reihe 25 verfügt über mehrere, in dem dargestellten Ausschnitt fünf Nano-Formgebungsstrukturen 1a-1e, welche in den Reihen 25 äquidistant oder mit beliebigen Abständen angeordnet sein können. Die Reihen 25 sind mit durchgehenden Keilflächen 27, 28 gebildet, welche in einem in Richtung der Längsachse sowie der Dickenrichtung orientierten Schnitt V-förmig sind. Bei entsprechender Schnittführung durch eine Nano-Formgebungsstruktur 1 bildet die Keilfläche 27 den Verbindungsbereich 17a sowie den Spaltbereich 22a aus, während die andere Keilfläche 28 den Verbindungsbereich 17b sowie den Spaltbereich 22b ausbildet. Die in Fig. 6 dargestellte erste Strukturgeometrie 3 (und damit auch die zweite Strukturgeometrie 6) ist abweichend zu der ersten Strukturgeometrie gemäß den Ausführungsbeispielen gemäß Fig. 1 bis 4 ausgebildet. Hier sind keine Zacken 11-14 mit entsprechenden Zackenbereichen 18-21 in den Strukturschenkeln 16 ausgebildet. Vielmehr sind, ausgehend von den Keilflächen 27, 28 im Bereich der Nano-Formgebungsstrukturen 1 rechteckförmige Ausnehmungen in beide Richtungen in die Keilflächen 27, 28 eingebracht, welche in der ersten Strukturgeometrie 3 gemäß Fig. 6 ungefähr fluchtend zueinander angeordnet und orientiert sind, so dass sich die Begrenzungen in Längsrichtung fortsetzen. Erst mit Herbeiführung der zweiten Strukturgeometrie 6 mit einer Annäherung der Keilflächen 27, 28 aneinander erfolgt eine Abwinklung der beiden derart gebildeten Ausnehmungen 29, 30 der Keilflächen 27, 28 gegeneinander.

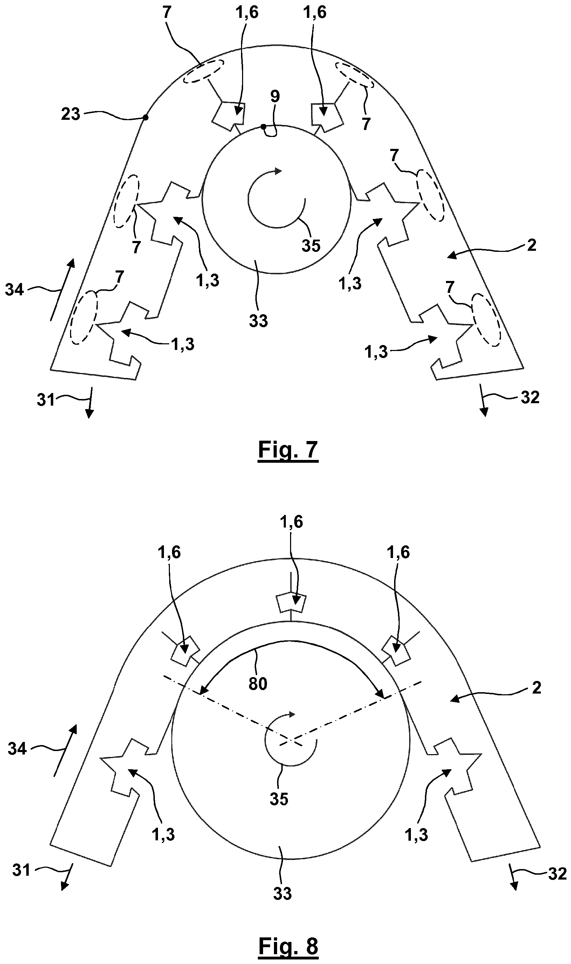

**Fig. 7** zeigt die Nutzung der Folie 2 mit den mehreren Nano-Formgebungsstrukturen 1 gemäß Fig. 6 in einem endlosen Verfahren. Über Zugkräfte 31, 32 wird die als eine Art endloser "Trum" ausgebildete Folie 2 mit ihrer Oberfläche 9 gegen einen Verformungskörper 33 gezogen, womit sich die Oberfläche 9 bei hinreichenden Zugkräften 31, 32 an die Kontur des Verformungskörpers 33 anpasst. Für das dargestellte Ausführungsbeispiel handelt es sich bei dem Verformungskörper 33 um eine Walze oder einen Zylinder. Während durchaus möglich ist, dass das Anlegen der Folie 2 an den Verformungskörper 33 immer wieder erneut im Bereich unterschiedlicher Nano-Formgebungsstrukturen 1 erfolgt, ist gemäß dem Ausführungsbeispiel, welches in Fig. 7 dargestellt ist, die Folie 2 als Endlosstruktur dargestellt, welche sich mit einer Geschwindigkeit 34 bewegt. Auch der Verformungskörper 33 rotiert mit einer Geschwindigkeit 35, welche ein schlupffreies Anlegen und gemeinsames Bewegen der Mantelfläche des Verformungskörpers 33 und der Oberfläche 9 der Folie 2 gewährleistet. Infolge der Krümmung der Mantelfläche des Verformungskörpers 33 und der Anpassung der Folie 2 an diese erfolgt die Verformung des Verformungsbereich 7 von der ersten Strukturgeometrie 3 in dem geradlinigen Teilbereich der Folie 2 zu der zweiten Strukturgeometrie der Nano-Formgebungsstrukturen 1 in dem Teilbereich, in welchem die Folie 2 an der Mantelfläche des Verformungskörpers 33 anliegt. Mit Verlassen des Verformungskörpers 33 erfolgt die Rückverformung des Verformungsbereichs 7, so dass eine Formänderung von der zweiten Strukturgeometrie 6 zurück in die erste Strukturgeometrie 3 erfolgt, wofür auch die Zugkräfte 31, 32 verantwortlich sind.

**Fig. 8** zeigt eine abgewandelte Ausführungsform, bei welcher der Radius des walzenartigen Verformungskörpers 33 größer ist als für das Ausführungsbeispiel gemäß Fig. 7. Die Krümmung bzw. der Radius des Verformungskörpers 33 hat Einfluss auf das Ausmaß der Winkeländerung α₁ nach α₂ für die Nano-Formgebungsstrukturen 1: je größer die Krümmung bzw. je kleiner der Radius des Verformungskörpers 33 um so größer die herbeiführbare Änderung des Öffnungswinkels und damit der Verformung der Nano-Formgebungsstruktur 1. Durch Wahl der Krümmung bzw. des Radius kann beispielsweise Einfluss darauf genommen werden, ob sich die Keilflächen 27, 28 vollständig schließen oder ein Teilkeil verbleibt (oder ob gemäß dem Ausführungsbeispiel gemäß Fig. 1 die Öffnung 10 vollständig oder nur teilweise geschlossen wird). Andererseits kann über den Radius bzw. die Krümmung die Anpresskraft zwischen den Verbindungsbereichen 17a, 17b und/oder den Spaltbereichen 22a, 22b vorgegeben werden. Andererseits zeigt der Vergleich von Fig. 7 mit Fig. 8, dass ein Umschlingungswinkel 80 zwischen dem Formgebungskörper 23 und der Folie als Prozessparameter vorgegeben werden kann. Je größer der Umschlingungswinkel 80, desto länger liegt die zweite Strukturgeometrie 6 bei vorgegebenen Geschwindigkeiten34, 35 vor.

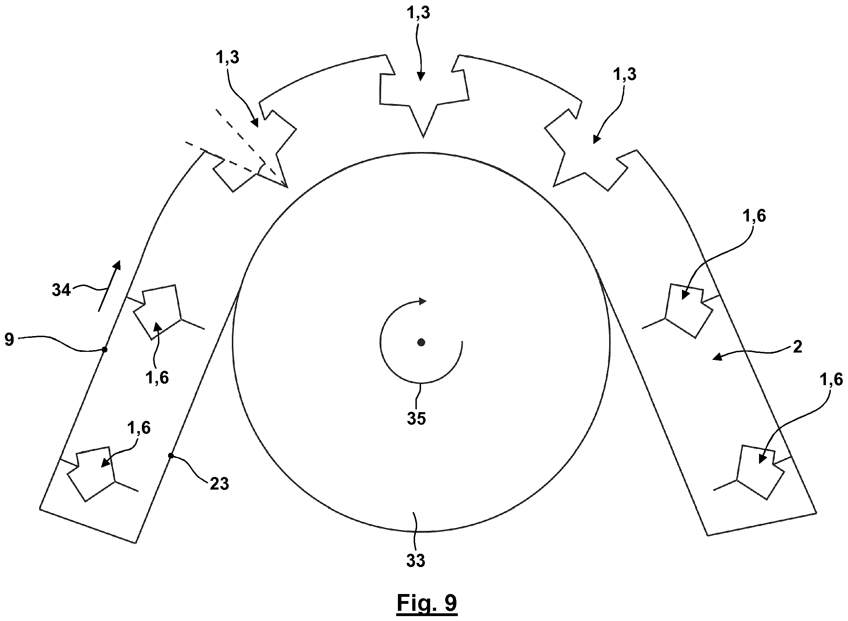

**Fig. 9** zeigt eine abgewandelte Ausführungsform, bei welcher in dem nicht an dem Verformungskörper 33 angelegten, geradlinigen Teilbereich der Folie 2 die Nano-Formgebungsstrukturen 1 die zweite Strukturgeometrie 6 besitzen, während die Nano-Formgebungsstrukturen 1, im Bereich welcher die Folie 2 an der Mantelfläche des hier ebenfalls walzenförmigen Verformungskörpers 33 anliegt, in der ersten Strukturgeometrie 3 sind. Für dieses Ausführungsbeispiel liegt die Folie 2 mit ihrer Unterfläche 23 an dem Verformungskörper 33 an. Vorzugsweise ist der Verformungsbereich 7 im an den Verformungskörper 33 anliegenden Bereich elastisch verformt.

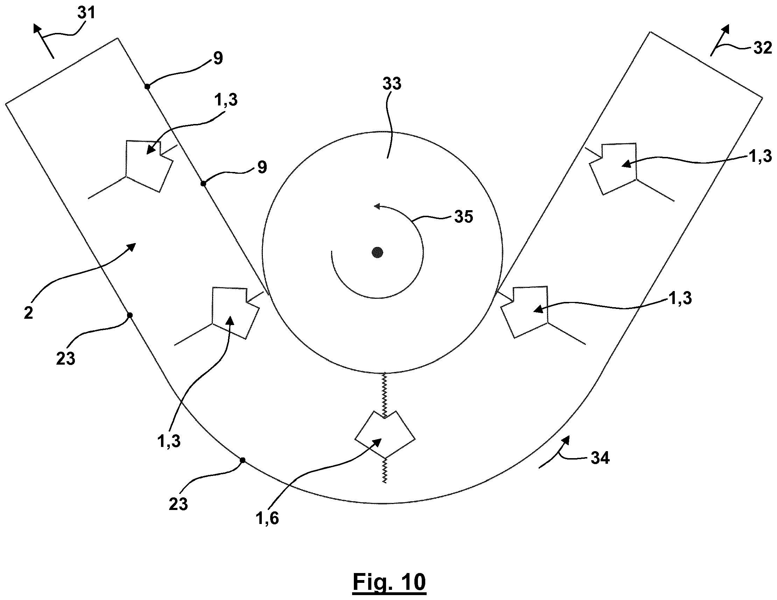

**Fig. 10** zeigt eine besondere Ausführungsform, welche grundsätzlich der Ausführungsform gemäß Fig. 7 und 8 entspricht. Allerdings sind in dem nicht an dem Verformungskörper 33 anliegenden Teilbereich der Folie 2 die ersten Strukturgeometrien 3 bereits geschlossen. Mit Anlegen der Folie 2 an den Verformungskörper 3 werden die Nano-Formgebungsstrukturen 1 in dem Anlagebereich zu der zweiten Strukturgeometrie 6 verformt, wobei diese weiterhin geschlossen ist. Wie in Fig. 10 mit der geschlängelten Linie dargestellt ist, unterscheidet sich die zweite Strukturgeometrie 6 von der ersten Strukturgeometrie 3 dadurch, dass die Keilflächen 27, 28 und/oder die Verbindungsbereiche 17a, 17b und die Spaltbereiche 22a, 22b stärker aneinander angepresst werden mit hiermit einhergehender elastischer Verformung nicht nur des Verformungsbereichs 7, sondern auch des Materials der Folie 2 im Umgebungsbereich der Nano-Formgebungsstrukturen 1. Dies führt einerseits zu einer verbesserten Schließung der Nano-Formgebungsstrukturen 1 und andererseits unter Umständen zu einer weiteren Konturänderung auch im Bereich der Zacken 11-14 oder Ausnehmungen 29, 30 mit einem weiteren Verpressen des Materials 4 der Nanostrukturen 5.

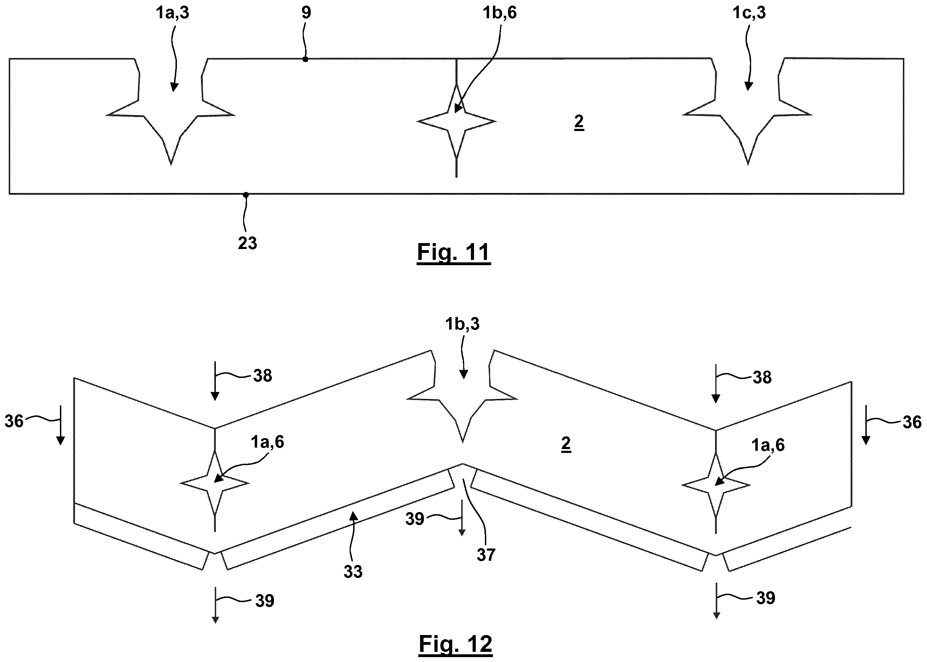

**Fig. 11 und 12** zeigen ein Herstellungsverfahren, bei welchem die Folie 2 nicht kontinuierlich bewegt wird. Vielmehr wird die Folie 2 von der nicht verspannten Ausgangsstellung gemäß Fig. 11 in eine Bewegungsrichtung 36 an einen hier zickzack-förmigen Verformungskörper 33 angenähert, wobei gemäß Fig. 12 der Verformungskörper 33 im Bereich seiner Ecken Ausnehmungen 37 besitzt. Die Annäherung in die Bewegungsrichtung 36 wird verursacht durch einen Druckunterschied zwischen der Oberfläche 9 und der Unterfläche 23 der Folie 2. Im Bereich der Oberfläche wird ein Druck 38 erzeugt, der größer ist als ein Druck 39, welcher auf der Unterfläche 23 der Folie 2 wirkt. Hierzu kann Luft oder ein anderes Fluid durch eine geeignete Saugeinrichtung von der Unterfläche 23 der Folie 2 abgesaugt werden, was beispielsweise durch die Ausnehmungen 37 des Verformungskörpers 33, Poren oder entsprechende Saugkanäle des Verformungskörpers 33 u. ä. erfolgen kann. Die Folie 2 wird derart positioniert, dass sich im Bereich des Verformungskörpers 33 mit der maximalen Krümmung, hier im Bereich der Ecken des zickzack-förmigen Verformungskörpers 33, die Nano-Formgebungsstrukturen 1 befinden. Fig. 11 und 12 zeigen zwei Nano-Formgebungsstrukturen 1 a, 1 c, welche in dem nicht angesaugten Zustand gemäß Fig. 11 mit ebener Folie 2 ihre erste Strukturgeometrie 3 besitzen, während eine weitere Nano-Formgebungsstruktur 1 b ihre zweite Strukturgeometrie 6 besitzt. Beispielsweise können in dem Zustand gemäß Fig. 11 die Nano-Formgebungsstrukturen 1 a, 1 c mit Material 4 gefüllt werden. Die Folie 2 wird derart positioniert, dass die Folie 2 im Bereich der Nano-Formgebungsstrukturen 1 a, 1 c zur Anlage kommt an Ecken des Verformungskörpers 33, welche auf der der Folie 2 zugewandten Seite konkav gekrümmt sind. Somit kommt es zum Schließen der Nano-Formgebungsstrukturen 1 a, 1 c, womit die zweiten Strukturgeometrien 6 von den Nano-Formgebungsstrukturen 1 a, 1 c ausgebildet werden. Hingegen liegt die Folie 2 im Bereich der Nano-Formgebungsstruktur 1 b im Bereich einer konvexen Krümmung oder Abwinklung des Verformungskörpers 33 an, womit die Nano-Formgebungsstruktur 1 ihre erste Strukturgeometrie 3 einnimmt, in der diese beispielsweise mit Material 4 befüllt werden kann oder eine in der ersten Strukturgeometrie 3 befindliche hergestellte Nanostruktur 5 entnommen werden kann. Wird anschließend eine Rückführung der Folie aus dem Zustand gemäß Fig. 12 in den Zustand gemäß Fig. 11 durchgeführt, können in den Nano-Formgebungsstrukturen 1 a, 1 c gefertigte Nanostrukturen 5 entnommen werden, während unter Umständen in der Nano-Formgebungsstruktur 1 b nun Material 4 zur Bildung der Nanostruktur 5 verpresst werden kann. Für das in Fig. 11 und 12 dargestellte Ausführungsbeispiel sind die Ausnehmungen 1 a, 1 b, 1 c sämtlich von der Oberfläche 9 in die Folie 2 eingebracht.

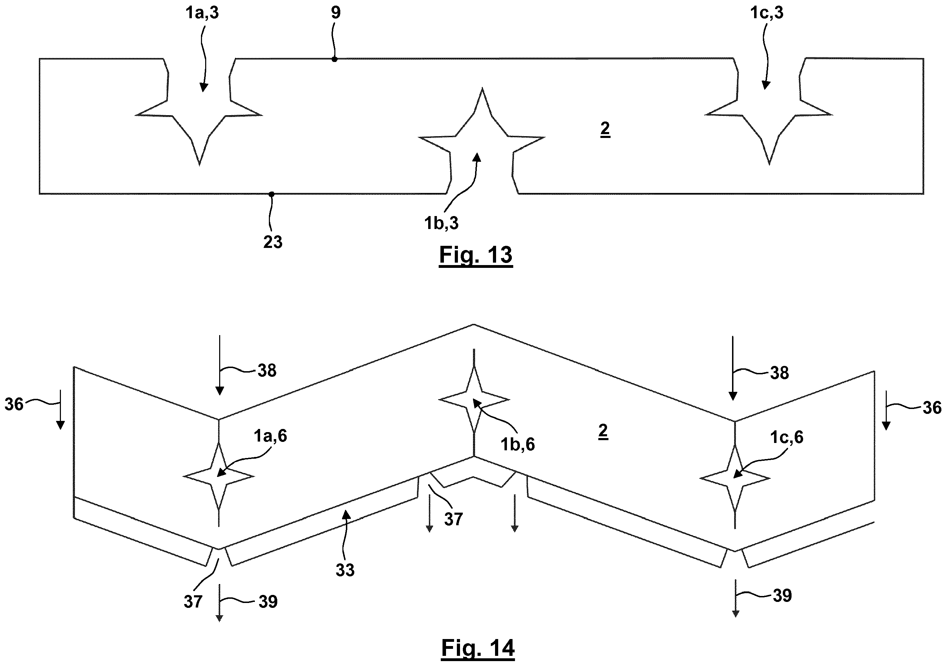

**Fig. 13 und 14** zeigen ein anderes Ausführungsbeispiel, für welches die Nano-Formgebungsstrukturen 1a, 1c von der Oberfläche 9 in die Folie 2 eingebracht sind, während die dazwischen angeordnete Nano-Formgebungsstruktur 1 b von der Unterfläche 23 in die Folie 2 eingebracht ist. Hier befinden sich allerdings in dem ebenen Zustand der Folie 2 sämtliche Nano-Formgebungsstrukturen 1a bis 1 c in der ersten Strukturgeometrie 3. Wie in Fig. 14 zu erkennen ist, führt die Annäherung der Folie 2 an den hier ebenfalls zickzack-förmigen Verformungskörper 33 dazu, dass sämtliche Nano-Formgebungsstrukturen 1a bis 1 c in die zweite Strukturgeometrie 6 überführt werden, was für die Nano-Formgebungsstrukturen 1 a, 1 c im Bereich der konkaven Krümmungen des Verformungskörpers 33 erfolgt, während dies für die Nano-Formgebungsstruktur 1 b im Bereich der konvexen Krümmung des Verformungskörpers 33 erfolgt.

Für eine Herstellung der Folie 2 mit den Nano-Formgebungsstrukturen 1 gibt es vielfältige Möglichkeiten, von welchen im Folgenden lediglich einige Möglichkeiten beispielhaft genannt werden, ohne dass eine Einschränkung der Erfindung auf die Fertigung mit den im Folgenden genannten Fertigungsverfahren erfolgen soll.

Grundsätzlich ist eine direkte Strukturierung der Folie 2 möglich, wobei die eingesetzten Verfahrenstechniken materialabhängig sein können. Als maskengebendes Verfahren kann eine Foto-Elektronenstrahl- oder lonenstrahllithografie eingesetzt werden. Anschließend kann ein geeignetes Ätzverfahren eingesetzt werden.

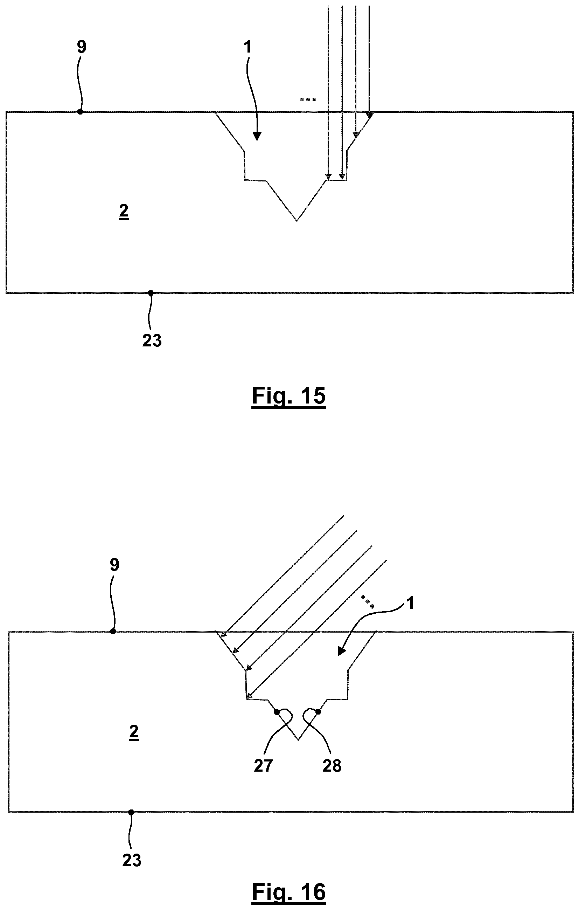

Möglich ist, dass eine Strukturierung vertikal zur Oberfläche 9 erfolgt, wie dies in Fig. 15 dargestellt ist. Durchaus möglich ist aber auch, dass eine Strukturierung vertikal zu einer Keilfläche 27, 28 erfolgt, s. **Fig. 16****.** Die Strukturierung kann in einem einzigen Schritt oder in beliebig vielen Teilschritten erfolgen. Beispielsweise kann zunächst die Einbringung der Keilflächen 27, 28 in einem ersten Verfahrensschritt erfolgen, während dann in einem anschließenden Verfahrensschritt zusätzliche Vertiefungen in die Keilflächen 27, 28 eingearbeitet werden. Möglich ist, dass die Strukturgeometrie direkt in ein geeignetes Material eingebracht wird, was vorzugsweise mittels einer Laserlithografie, insbesondere einer Zwei-Photonen-Laser-Lithografie erfolgt.

Ebenfalls möglich ist, dass eine indirekte Strukturierung erfolgt unter Einsatz eines so genannten Form-Masters 40. Der Form-Master 40 wird vorzugsweise aus einem festen, steifen, unflexiblen Material gefertigt und besitzt eine positive Strukturgeometrie 41, welche eine Umkehrung der ersten oder zweiten Strukturgeometrie 3, 6 der herzustellenden Folie 2 oder eines anderweitigen Grundkörpers für Nano-Formgebungsstrukturen 1 ist. Der Form-Master 40 kann zur Erzeugung vielfältiger Nano-Formgebungsstrukturen 1 in ein- und derselben Folie 2 oder in mehreren Folien 2 oder anderweitigen Grundkörpern zur Ausbildung von Nano-Formgebungsstrukturen 1 genutzt werden. Auch ein so genanntes "Step-And-Repeat-Verfahren" mit einem wiederholt gegenüber einem Grundkörper oder einer Folie 2 versetzt verwendenden Form-Master 40 kann Einsatz finden.

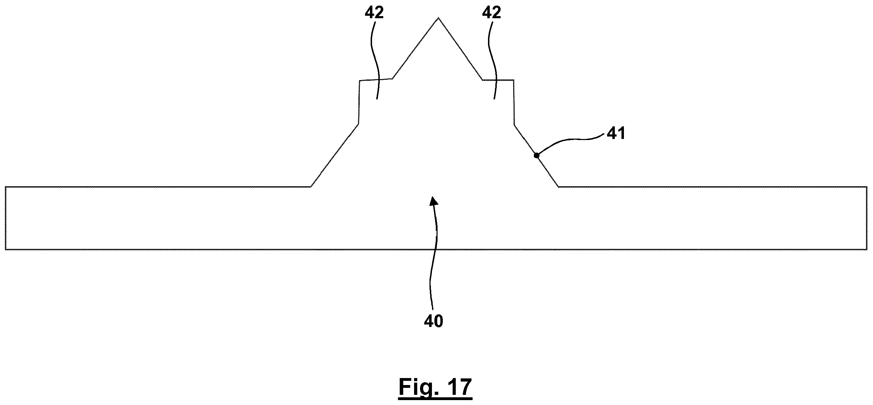

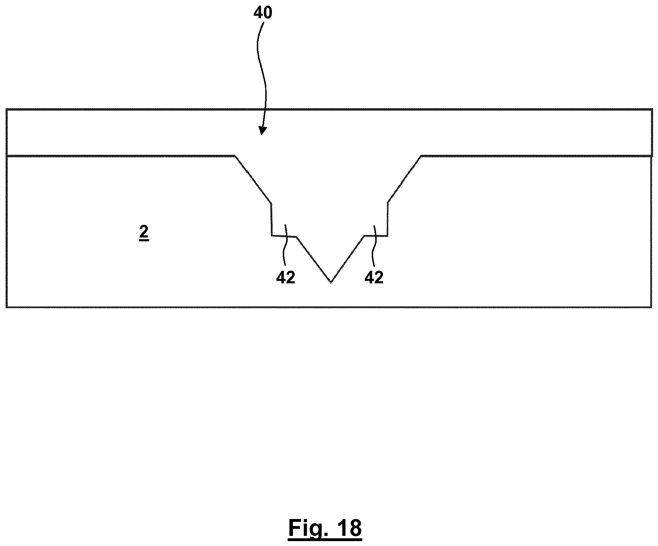

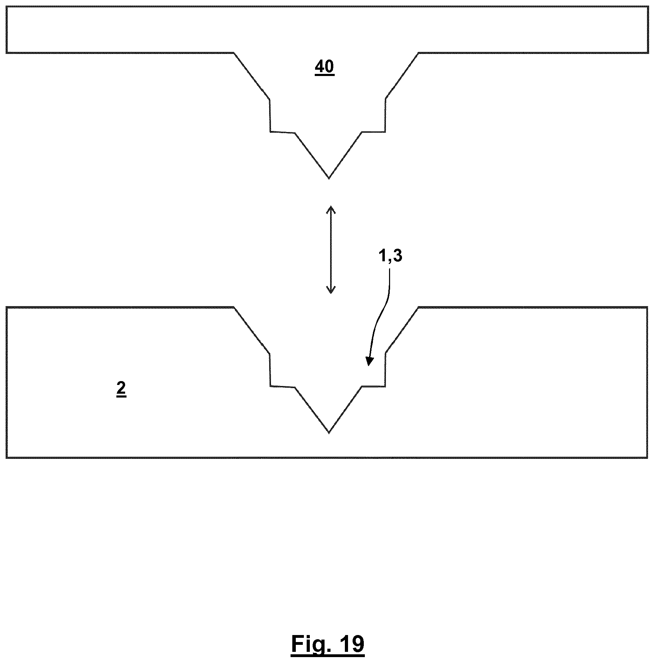

Der Form-Master 40 gemäß **Fig. 17** kann Einsatz finden in einem planaren Abformprozess, wie dieser in **Fig. 18** **und** **19** dargestellt ist. Hierzu wird der Form-Master 40 in einen Grundkörper oder eine Folie 2 eingepresst. Allein durch die Anpresskraft des Form-Masters 40 an die Folie 2 oder durch ergänzende, die Verformung der Folie 2 unterstützende Maßnahmen kann der Abformprozess herbeigeführt werden. In diesem Abformprozess wird die Strukturgeometrie 41 in die Folie 2 eingeformt. Hierbei können an sich Vorsprünge 42 des Form-Masters 40 (oder auch entsprechende Vertiefungen) dem Einsatz eines klassischen Abformprozess entgegenstehen. Für das erfindungsgemäße Verfahren kann auch für Form-Master mit derartigen Vorsprüngen 42 oder Vertiefungen das Abformverfahren durchgeführt werden, da der Grundkörper oder die Folie 2 flexibel ist, wobei ergänzend die Flexibilität während des Abformprozesses und der Entfernung des Form-Masters 40 von dem Grundkörper oder der Folie 2 genutzt werden kann. Gemäß Fig. 19 wird nach Beendigung des Abformprozesses der Form-Master 40 von dem Grundkörper oder der Folie 2 entfernt, wobei für das Entformen auch die Flexibilität der Folie 2 und die Verformung von der zweiten Strukturgeometrie 6 zu der ersten Strukturgeometrie 3 genutzt werden kann.

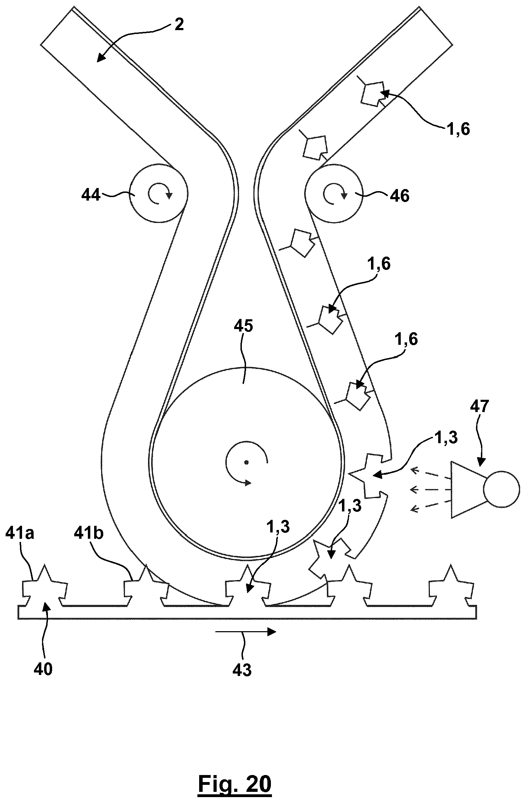

**Fig. 20** zeigt ein kontinuierliches oder endloses Abformverfahren für die Herstellung einer Folie 2 mit Nano-Formgebungsstrukturen 1. Hier besitzt der Form-Master 40 mehrere sich quer zu einer Förderrichtung 43 erstreckende Strukturgeometrien 41 a, 41 b, ... Das Rohmaterial für die Folie 2, welche hier vorzugsweise mehrschichtig ausgebildet ist, wird über Förderwalzen 44, 45, 46 gefördert. Im Bereich der Förderwalze 45 erfolgt eine abrollende Abformung zwischen Form-Master 40 und Folie 2. Somit ist die Folie 2 im Bereich der Förderwalze 45 entsprechend der Mantelfläche der Förderwalze 45 verformt, während das Abformen des Formmasters 40 in der Folie 2 erfolgt. Nach dem Erhitzen des Form-Masters 40 und einem Schmelzen des Materials 2 mit einem Abformen des Form-Masters 40 in der Folie 2, vorzugsweise im stromabwärtigen Endbereich der Umschlingung der Förderwalze 45, erfolgt mittels einer Härteeinrichtung 47 ein Aushärten der Folie 2 mit der ersten Strukturgeometrie 3. Ebenfalls möglich ist, dass das Material 2 vor dem Kontakt mit dem Form-Master 40 durch eine zusätzliche Wärmequelle verflüssigt oder aufgeweicht wird. Derart gefertigte Nano-Formgebungsstrukturen 1, welche sich von der Mantelfläche der Förderwalze 45 trennen, werden infolge der Vorspannung der Folie 2 von der ersten Strukturgeometrie 3, in welcher der Form-Master 40 seine Strukturgeometrie 41 an die Folie übergibt, verformt in die zweite Strukturgeometrie 6.

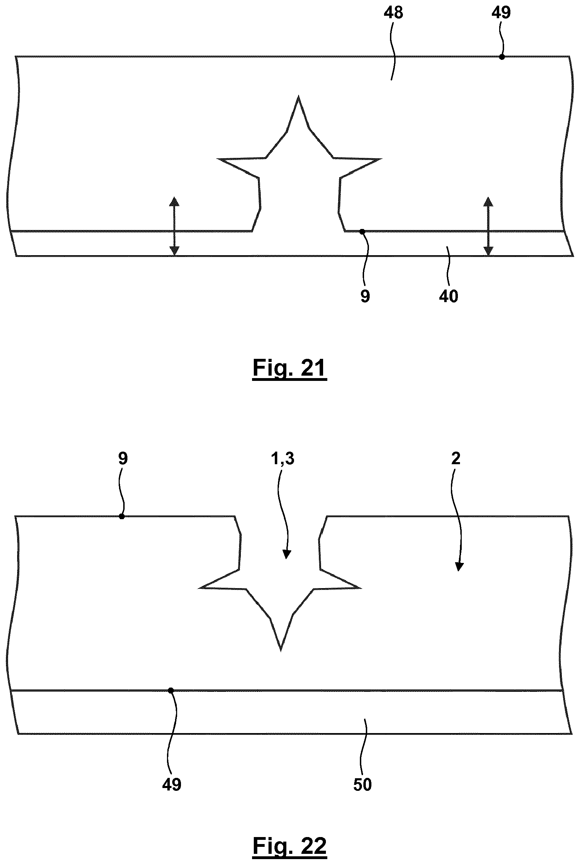

**Fig. 21 und 22** zeigen ein weiteres Beispiel für eine mögliche Herstellung einer Folie 2 oder eines anderweitigen Grundkörpers für mindestens eine Nano-Formgebungsstruktur 1. Für dieses Ausführungsbeispiel wird ein Form-Master 40 mit einer Lackschicht 48 versehen. Nach dem Aushärten der Lackschicht 48 wird der Form-Master 40 von der Lackschicht 48 entfernt. Hieran anschließend wird die Lackschicht 48 auf der Fläche 49 der Lackschicht 48, welche dem Form-Master 40 abgewandt war, mit einer flexiblen Tragschicht 50 verbunden. Von Vorteil ist, wenn die Tragschicht 50 bereits mit der Lackschicht 48 verbunden wird, wenn diese noch mit dem Form-Master 40 verbunden ist. In diesem Fall sollte vorzugsweise die Anhaftung der Tragschicht 50 an der Lackschicht 48 größer sein als die Anhaftung der Lackschicht 48 an dem Form-Master 40. Es versteht sich, dass bei der Herstellung einer Folie 2 mit mehreren Nano-Formgebungsstrukturen die Tragschicht 50 durchgehend ausgebildet sein kann, während jeweils eine nur lokal angeordnete Lackschicht 48 eine Nano-Formgebungsstruktur 1 bereitstellen soll.

Zur Herstellung des Form-Masters 40 können an sich bekannte Herstellungstechniken eingesetzt werden, insbesondere maskengebende Verfahren wie eine Foto-, Elektronenstahl- oder Ionenstrahllithografie, ggf. mit anschließendem Ätzverfahren. Für die Fertigung des Form-Masters gilt das zu Fig. 15 und 16 Gesagte entsprechend. Ebenfalls möglich ist, dass für die Herstellung des Form-Masters die in der Beschreibungseinleitung genannten Verfahren Einsatz finden können.

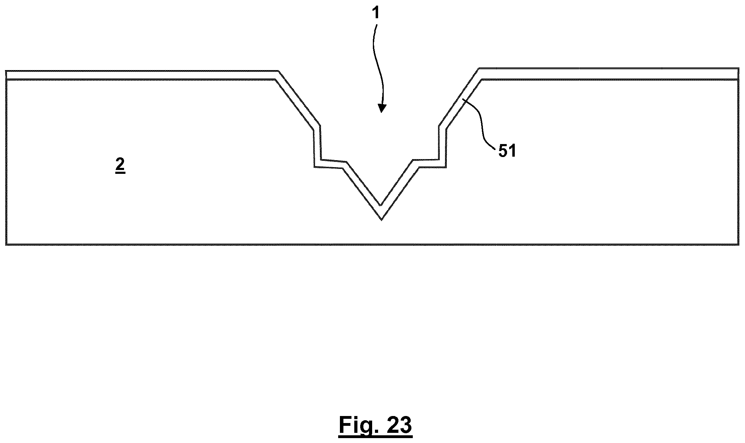

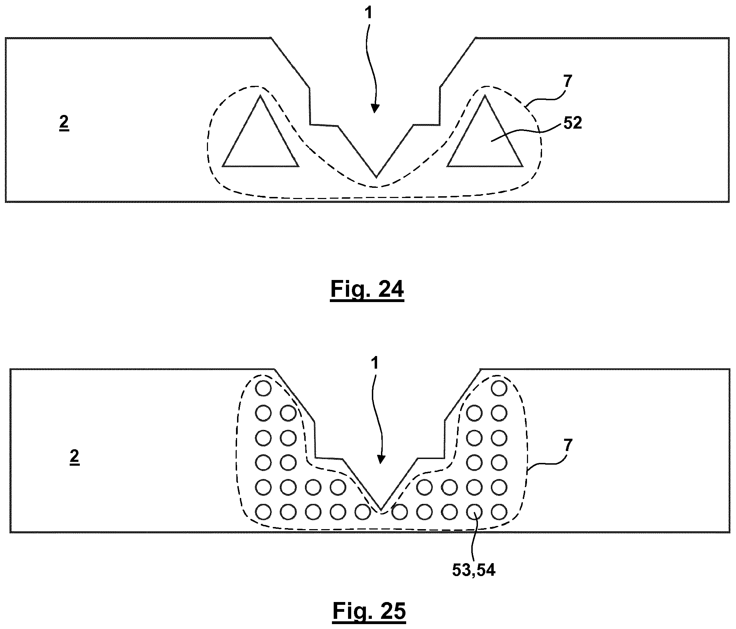

Je nach Ausgestaltung des Abformungsprozesses von der Nano-Formgebungsstruktur 1 zu der Nanostruktur 5 können ergänzende Maßnahmen ergriffen werden:
- Gemäß **Fig. 23** kann die Nano-Formgebungsstruktur 1, insbesondere die erste Strukturgeometrie 3 oder die zweite Strukturgeometrie 6, mit einer Beschichtung 51 ausgestattet werden, welche sich insbesondere im Bereich der Strukturgeometrie 3, 6, aber auch außerhalb derselben erstrecken kann. Bei der Beschichtung 51 kann es sich um eine Antihaftbeschichtung handeln oder eine so genannte Opfer-Beschichtung.
- Gemäß Fig. **24, 25** kann im Verformungsbereich 7 die Folie 2 über Ausnehmungen 52, Bohrungen 53 und/oder Poren 54 verfügen, welche gezielte Materialschwächungen darstellen, um eine Verformung zu erleichtern oder gewünschte Verformungswege konstruktiv vorzugeben. Möglich ist auch, dass die Ausnehmungen 52, Bohrungen 53 und/oder Poren 54 als Luftkammern genutzt werden, welche gezielt mit Über- oder Unterdruck beaufschlagt werden können. Dies kann erfolgen, um das Material 4 für die Nanostruktur 5 gezielt anzusaugen vor dem Verformungs-Vorgang oder aber die Nanostruktur 5 aus der Nano-Formgebungsstruktur herauszublasen. Ebenfalls möglich ist, dass die Beaufschlagung entsprechender fluidischer Kammern genutzt wird, um eine gezielte Verformung der Nano-Formgebungsstruktur 1 herbeizuführen oder zu unterstützen, was im Zuge der Formgebung der Nanostruktur 5 oder für ein Auswerfen der Nanostruktur 5 erfolgen kann.

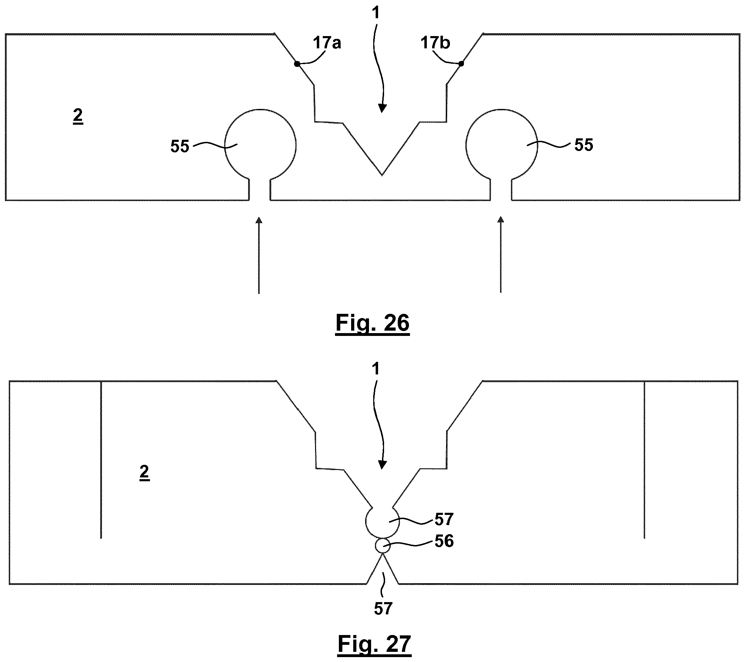

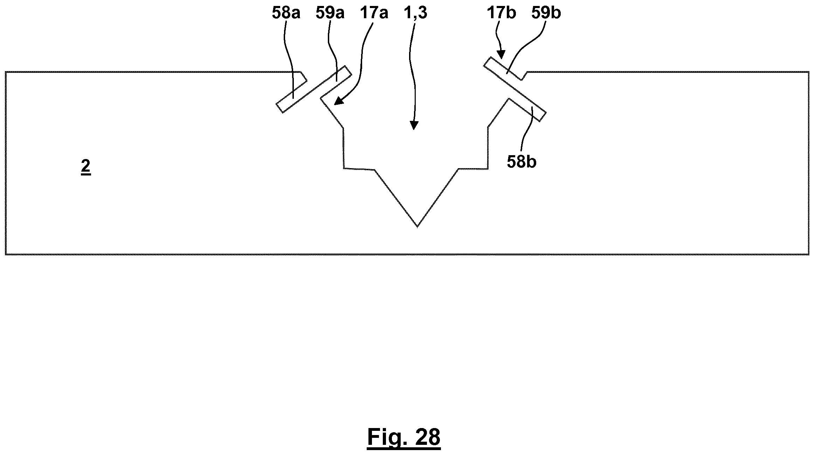

- **Fig. 26** zeigt Druckluftkanäle 55, welche gezielt druckbeaufschlagt werden können, um eine Verformung der Nano-Formgebungsstruktur 1 herbeizuführen. Beispielsweise kann gemäß Fig. 26 eine Druckbeaufschlagung der Druckluftkanäle 55 genutzt werden, um eine Verringerung des Öffnungswinkels bzw. eine Annäherung oder Anpressung der Verbindungsbereiche 17a, 17b herbeizuführen oder zu unterstützen oder Partikel herauszudrücken.
- Zur Verteilung oder Reduzierung von Spannungen in dem Verformungsbereich 7 kann auch ein Scharnier 56 Einsatz finden, wie dies in **Fig. 27** dargestellt ist. Darüber hinaus zeigt Fig. 27 Verformungsbereiche und/oder Materialschwächungen 57 zur Ermöglichung oder Vereinfachung einer Verformung.
- In den Verbindungsbereichen 17a, 17b können zusätzliche Maßnahmen zu einer verbesserten Schließung der Strukturgeometrie getroffen sein. **Fig. 28** zeigt die Ausstattung der Verbindungsbereiche 17a, 17b jeweils mit einer Nut 58 sowie einer Feder 59. Mit der Herbeiführung der zweiten Strukturgeometrie 6 tritt die Feder 59a des Verbindungsbereichs 17a ein in die Nut 58b des Verbindungsbereichs 17b. Umgekehrt tritt die Feder 59b des Verbindungsbereichs 17b ein in die Nut 58a des Verbindungsbereichs 17a. Auf diese Weise ist ein labyrinthartiger Verschluss der Ausnehmung in der zweiten Strukturgeometrie 6 gebildet.

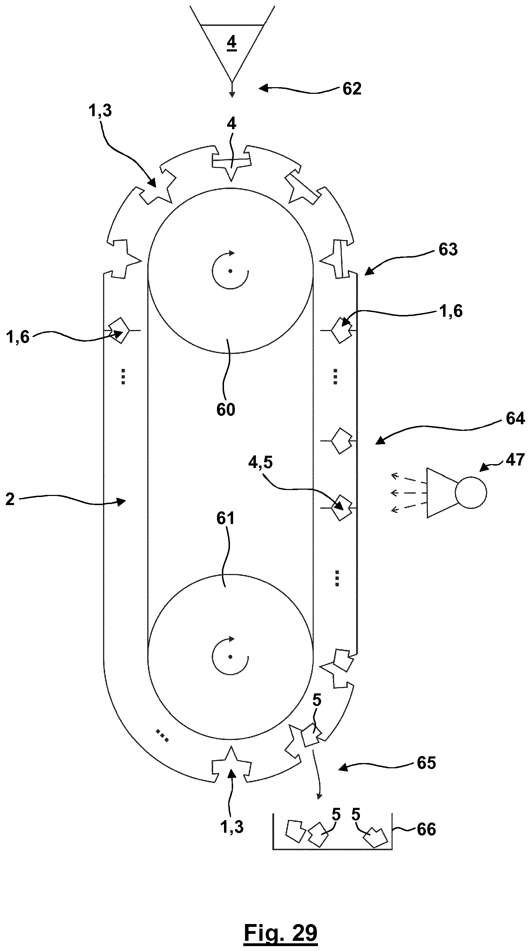

**Fig. 29** zeigt ein kontinuierliches oder endloses Fertigungsverfahren von Nanostrukturen 5 unter Einsatz einer erfindungsgemäßen Folie 2 mit mehreren Nano-Formgebungsstrukturen 1. Hierbei ist die Folie 2 in der Art eines kontinuierlichen Förderbands um zwei Förderwalzen 60, 61 geschlungen. Für das dargestellte Ausführungsbeispiel bilden die Nano-Formgebungsstrukturen 1 im Anlagebereich an die Förderwalzen 60, 61 die erste Strukturgeometrie 3 aus, während diese in dem geradlinigen Abschnitt der Folie 2 zwischen den beiden Förderwalzen 60, 61 die geschlossene zweite Strukturgeometrie 6 ausbilden.

Im Bereich der Förderwalze 60 ist eine Befüllstation 62 gebildet, im Bereich welcher die Nano-Formgebungsstruktur 1 in der ersten Strukturgeometrie 3 mit Material 4 befüllt wird. Im Rahmen einer Formgebungsstation 63, hier der Bereich, in welchem sich die Folie 2 von der Förderwalze 60 löst, erfolgt die Veränderung der Nano-Formgebungsstruktur 1 von der ersten Strukturgeometrie 3 in die zweite Strukturgeometrie 6. Dies hat zur Folge, dass das Material 4 in die Nanogeometrie 15 überführt wird. In einer Härtestation 64 mit einer Härteeinrichtung 47 wird das Material 4 der Nanostruktur 5 mit Nano-Formgebungsstruktur 1 immer noch in der zweiten Strukturgeometrie 6 gehärtet. Schließlich gelangt die Folie 2 in den Bereich einer Abgabestation 65. Hier kommt die Folie 2 zur Anlage an die Förderwalze 61, womit wieder die erste Strukturgeometrie 3 eingenommen wird, also die Nano-Formgebungsstruktur 1 geöffnet wird. Die Nanostruktur 5 fällt dann aus der zweiten Strukturgeometrie 6 heraus in einen Auffangbehälter 66. Im Bereich der Befüllstation 62 kann das Material 4 in die Nano-Formgebungsstruktur 1 beispielsweise durch Sprühen, Eintauchen, Bestreichen, Fliesen, Bedampfen oder Einfüllen eingeführt werden.

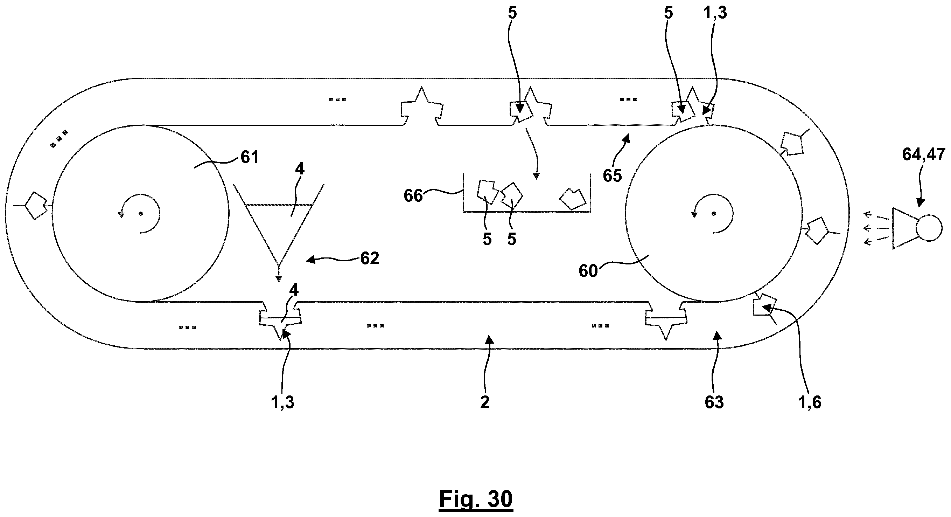

**Fig. 30** zeigt ein alternatives Herstellverfahren, bei welchem die Nano-Formgebungsstrukturen 1 ohne Verformung durch die Anlage an die Förderwalzen 60, 61, also in ebenen Zustand der Folie 2, in der ersten Strukturgeometrie 3 sind, während diese mit Anlage an die Förderwalzen 60, 61 die zweite Strukturgeometrie 6 einnehmen. Demgemäß ist gemäß Fig. 30 die Befüllstation 62 stromaufwärts der Förderwalze 60 angeordnet. Die Verformungsstation 63 ist hier mit dem Anlegebereich der Folie 2 an die Förderwalze 60 gebildet. Die Abgabestation 65 ist stromabwärts des Anlagebereichs der Folie 2 an die Förderwalze 60 angeordnet.

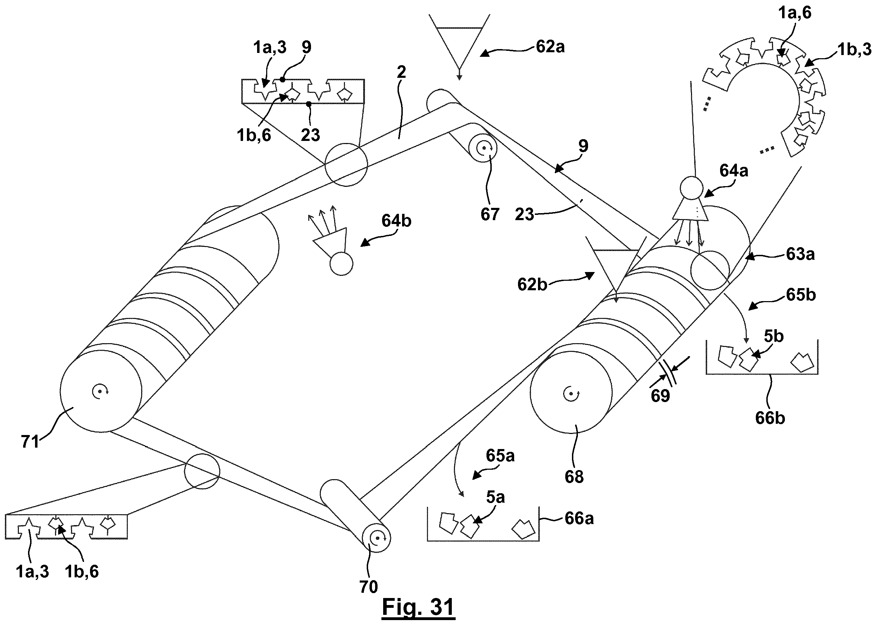

**Fig. 31** zeigt ein Herstellungsverfahren für Nanostrukturen 5, bei dem eine Folie 2 eingesetzt ist, in welche wechselseitig von beiden Seiten Nano-Formgebungsstrukturen in die Oberfläche 9 und die Unterfläche 23 eingebracht sind, wobei in die Oberfläche 9 eingebrachte Nano-Formgebungsstrukturen 1 für ebene Folie 2 in der ersten Strukturgeometrie 3 sind, während die von der Unterfläche 23 in die Folie 2 eingebrachten Nano-Formgebungsstrukturen für ebene Folie 2 in der zweiten Strukturgeometrie 6 und geschlossen ausgebildet sind. Erstgenannte Nano-Formgebungsstrukturen sind im Folgenden mit 1 a bezeichnet, während die zweitgenannten Nano-Formgebungsstrukturen mit dem Bezugszeichen 1 b gekennzeichnet sind. In dem endlosen "Kreisprozess" gemäß Fig. 31 wird das Verfahren beginnend ca. in der "Zwölf-Uhr-Position" beschrieben:
In einer Befüllstation 62a erfolgt ein Befüllen der Nano-Formgebungsstrukturen 1 a. Die Befüllstation 62a ist im Bereich einer Förderwalze 67 angeordnet, im Bereich welcher die Folie 2 im Uhrzeigersinn entlang der Mantelfläche geführt wird. Dies hat zur Folge, dass hier die Nano-Formgebungsstruktur 1 vollständig geöffnet wird, was das Einfüllen des Materials 4 in der Befüllungsstation 62a ermöglicht oder erleichtert. Hieran anschließend gelangt die Folie 2 zu einer Förderwalze 68, welche entgegengesetzt zur Förderwalze 67 rotiert. Die Folie 2 umschließt die Förderwalze 68 in umgekehrter Richtung zur Umschließung der Förderwalze 67. Der Umschlingungswinkel ist auf ein Vielfaches von 360° erhöht, indem die Folie 2 spiralförmig mit einem gewissen Abstand 69 um die Förderwalze 68 gewickelt ist. Die Umschlingung in umgekehrtem Richtungssinn hat zur Folge, dass an der Förderwalze 68 die Oberseite 9 an der Mantelfläche der Förderwalze 68 anliegt, während an der Förderwalze 67 die Unterseite 23 an der Mantelfläche der Förderwalze 67 anliegt. Dies hat wiederum zur Folge, dass die Nano-Formgebungsstruktur 1 a in die zweite Strukturgeometrie 6 überführt wird, so dass die Förderwalze 68 die Formgebungsstation 63a für die Nano-Formgebungsstrukturen 1 a bildet. Verlässt die Folie 2 die Förderwalze 68, erfolgt die Rückführung der Nano-Formgebungsstruktur 1 a in die erste Strukturgeometrie 3, womit im Bereich der Abgabestation 65a die hergestellten Nanostrukturen 5 in den Auffangbehälter 66 abgegeben werden können. Die Walze 68 bildet gleichzeitig eine Befüllstation 62b für die Nano-Formgebungsstrukturen 1 b, die im Bereich der Förderwalze 68 in der ersten Strukturgeometrie 3 sind. Ein erstes Schließen der ersten Strukturgeometrie 3 der Nano-Formgebungsstrukturen 1 b erfolgt mit dem Verlassen der Förderwalze 68. Ein zusätzliches Schließen erfolgt durch das Umschlingen der Förderwalzen 70, 71 und 67 in umgekehrter Richtung zur Umschlingung der Förderwalze 68. Schließlich erfolgt die Abgabe der in den Nano-Formgebungsstrukturen 1 b gefertigte Nanostrukturen 5 im Bereich der Abgabestation 65b, welche im Anlagebereich der Folie an die Förderwalze 68 gebildet ist. Somit ist die Förderwalze 68 für diese Ausgestaltungsform multifunktional, in dem die außenliegenden Nano-Formgebungsstrukturen 1 b für einen Auswurf der Nanostrukturen 5b genutzt werden, während die innenliegenden Nano-Formgebungsstrukturen 1 a im Bereich der Förderwalze 68 zum Verpressen des Materials 4 für die Nanostrukturen 5a genutzt werden. Zusätzlich finden Härtestationen 64a, 64b Einsatz, wobei die Härtestation 64a im Bereich der Förderwalze 68 das Material 4a in den Nano-Formgebungsstrukturen 1 a härtet, während die Härtestation 64b im Förderbereich der Folie 2 zwischen den Förderwalzen 71, 67 das Material 4b in den Nano-Formgebungsstrukturen 1 b härtet.

Ein Vorteil der spiralförmigen Umwicklung kann eine längere Verweildauer der Nano-Formgebungsstruktur im Bereich der Förderwalze 67 sein. Dieser Effekt kann sowohl für den Kontakt mit geöffneter Nano-Formgebungsstruktur als auch für den Kontakt mit geschlossener Nano-Formgebungsstruktur genutzt werden.

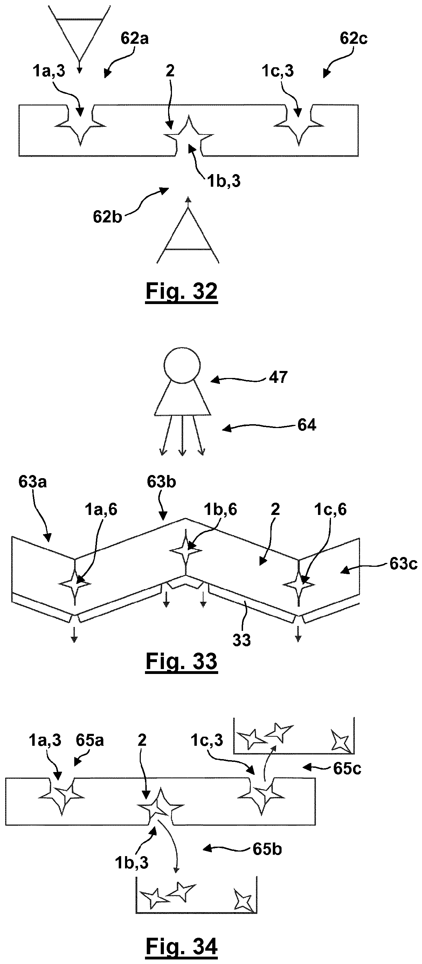

Die **Fig. 32 bis 34** zeigen ein Herstellungsverfahren für Nanostrukturen 5 mit einer Folie 2, wie diese in den Fig. 13 und 14 dargestellt und beschrieben ist. In dem Zustand der Folie 2 gemäß Fig. 13 erfolgt ein gleichzeitiges Befüllen sämtlicher Nano-Formgebungsstrukturen 1 a, 1 b, 1 c, wie dies in Fig. 32 (ohne Darstellung der Befüllstation 62c) dargestellt ist.

Fig. 33 zeigt den anschließenden Verfahrensschritt, in welchem entsprechend Fig. 14 die Nano-Formgebungsstrukturen 1 a, 1 b, 1 c durch den Verformungskörper 33 in die zweite Strukturgeometrie 6 überführt worden ist. Über eine Härteeinrichtung 47 oder mehrere derartige Härteeinrichtungen erfolgt eine Härtung des Materials 4 in den Nano-Formgebungsstrukturen 1a-1c.

Durch Lösen der Folie 2 von dem Verformungskörper 33 wird gemäß Fig. 34 wieder der Zustand entsprechend Fig. 13 der Folie 2 herbeigeführt, in welchem die erste Strukturgeometrie 3a bis 3c vorliegt. Nun kann die Abgabe der gefertigten Nanostrukturen 5a, 5b, 5c im Bereich der Abgabestationen 65a, 65, 65c erfolgen. Der Herstellungsprozess kann als Kreisprozess ausgeführt sein, so dass hieran anschließend wieder ein Verfahrensschritt entsprechend Fig. 32 ausgeführt wird mit dem Befüllen der Nano-Formgebungsstrukturen 1 a, 1 b, 1 c ... Die Härteeinrichtungen 47 im Bereich der Härtestationen 64 können beispielsweise mittels einer UV-Strahlung, einer Trocknung, einer chemischen Reaktion oder einer thermischen Einwirkung arbeiten.

Das Herauslösen der Nanostrukturen 5 im Bereich der Abgabestationen 65 kann auf beliebige Weise erfolgen. Falls erwünscht kann auch eine Vereinzelung der Nanostrukturen 5 durch einen Folgeprozess, insbesondere durch Brechen, Ätzen, Ultraschall, Erwärmen u. ä. erreicht werden. Die Nanostrukturen 5 können auch über eine Einwirkung von Ultraschall, eines Flüssigkeits- oder Gasstroms sowie die mittels einer Opferschicht (so genanntes "Lift-off") oder durch Herausdrücken mittels Aufquellen des Materials der Folie 2 oder der Ausdehnung interner Luftkammern oder Poren von der Nano-Formgebungsstruktur 1 getrennt werden.

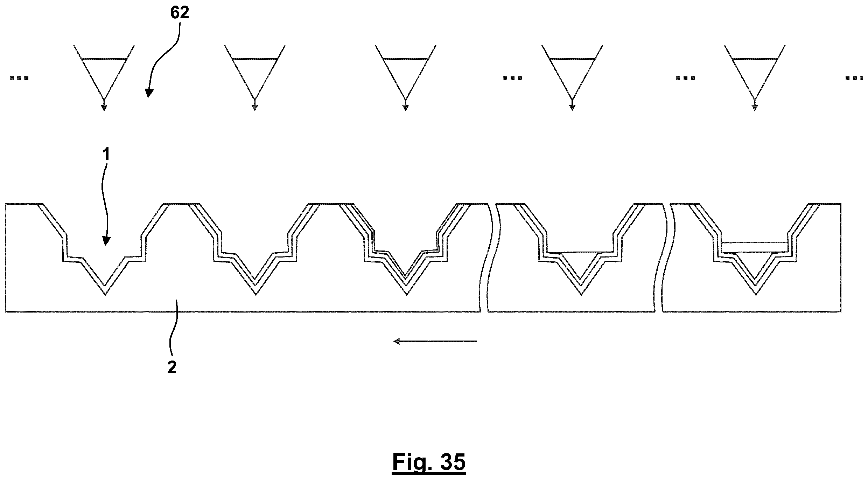

**Fig. 35** zeigt eine alternative Befüllstation 62, wie diese auch im Rahmen der zuvor eingesetzten Ausführungsformen Einsatz finden kann. Hier erfolgt eine mehrfache Befüllung mit gleichen oder unterschiedlichen Materialien. Zunächst werden hier beispielhaft vier unterschiedliche Schichten ungefähr konstanter Schichtdicke im Bereich der ersten Strukturgeometrie 3 erzeugt. Hieran anschließend erfolgt das eigentliche Befüllen der Nano-Formgebungsstruktur 1 mit dem Material, was ebenfalls auch schichtweise erfolgen kann.

Die folgenden Figuren stellen die Behandlung überschüssigen Materials dar: Dieses überschüssige Material kann unter Umständen an der Folie an der Oberfläche 9 oder der Unterfläche 23 anhaften und den Folgeprozess stören.

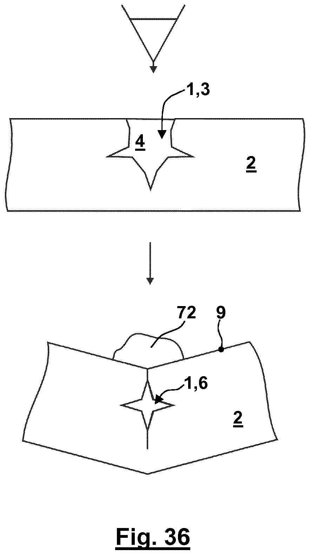

**Fig. 36** zeigt, dass eine Nano-Formgebungsstruktur 1 in der ersten Strukturgeometrie 3 vollständig mit Material 4 gefüllt wird. Wird dann die zweite Formgebungsstruktur 6 herbeigeführt, wird überschüssiges Material 72 aus der Ausnehmung 8 herausgepresst, welches auf der Oberfläche 9 im Umgebungsbereich der Nano-Formgebungsstruktur 1 anhaftet und dort verbleibt und aushärtet.

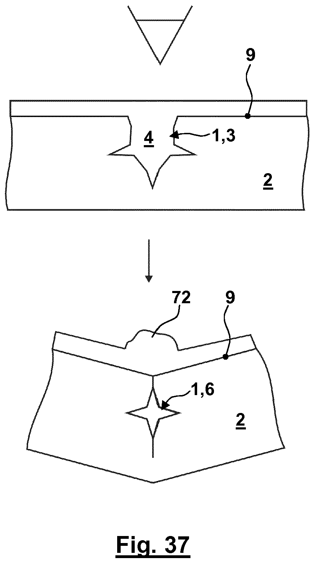

**Fig. 37** zeigt ein entsprechendes Auspressen überschüssigen Materials 72 für den Fall, dass nicht nur die erste Strukturgeometrie 3 mit dem Material 4 gefüllt wird, sondern vielmehr auch die Oberfläche 9 der Folie 2 großflächig mit dem Material 4 versehen, beispielsweise bestrichen, wird.

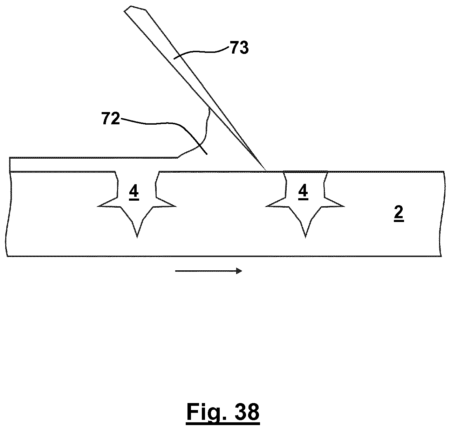

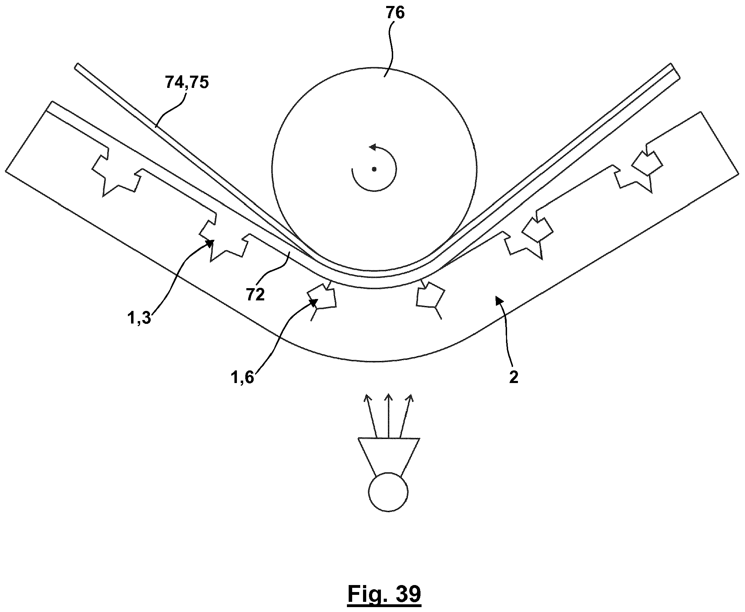

Überschüssiges Material 72, welches ausgehärtet sein kann oder noch nicht ausgehärtet ist und damit weich oder flüssig sein kann, kann mittels eines geeigneten Schabers 73 gemäß **Fig. 38** oder unter Einsatz eines Abnahmekörpers 74, an welchem das überschüssige Material 72 anhaftet und mitgenommen werden kann, beseitigt werden. Gemäß dem Ausführungsbeispiel in **Fig. 39** handelt es sich bei Abnahmekörper 74 um eine weitere Folie 75, welche über eine Anpresswalze 76 an die Folie 2 mit dem überschüssigen Material 72 angepresst wird. Gemäß dem Ausführungsbeispiel in Fig. 39 wird die Anpresswalze 76 multifunktional genutzt, indem diese einerseits als Formgebungsstation 63 genutzt wird, im Bereich welcher die Nano-Formgebungsstruktur 1 von der ersten Strukturgeometrie 3 in die zweite Strukturgeometrie 6 überführt wird, die Öffnung der Nano-Formgebungsstruktur 1 mit dem Lösen von der Anpresswalze 76 im Rahmen der Abgabestation 56 genutzt wird und gleichzeitig ein Anpressen der Folie 75 an das überschüssige Material 72 erfolgt. Ebenfalls möglich ist eine Entfernung überschüssigen Materials 72 durch einen Plasmaprozess, einen Ätzprozess, ein Ablösen durch Einwirken von Ultraschall u. ä. Möglich ist auch, dass zuvor ein Opfermaterial außerhalb der Nano-Formgebungsstruktur 1 auf die Folie 2 aufgetragen worden ist, so dass sich die Restschicht, die sich aus dem überschüssigen Material 72 bildet, auch durch Auflösen des Opfermaterials von der Folie 2 und der Nano-Formgebungsstruktur 1 ablösen kann. Ebenfalls möglich ist, dass überschüssiges Material strukturiert wird, indem dieses über eine zusätzlich strukturierte Umlenkwalze geführt wird. Kombinationen der vorgenannten Verfahren zur Behandlung überschüssigen Materials 72 sind ebenfalls möglich.

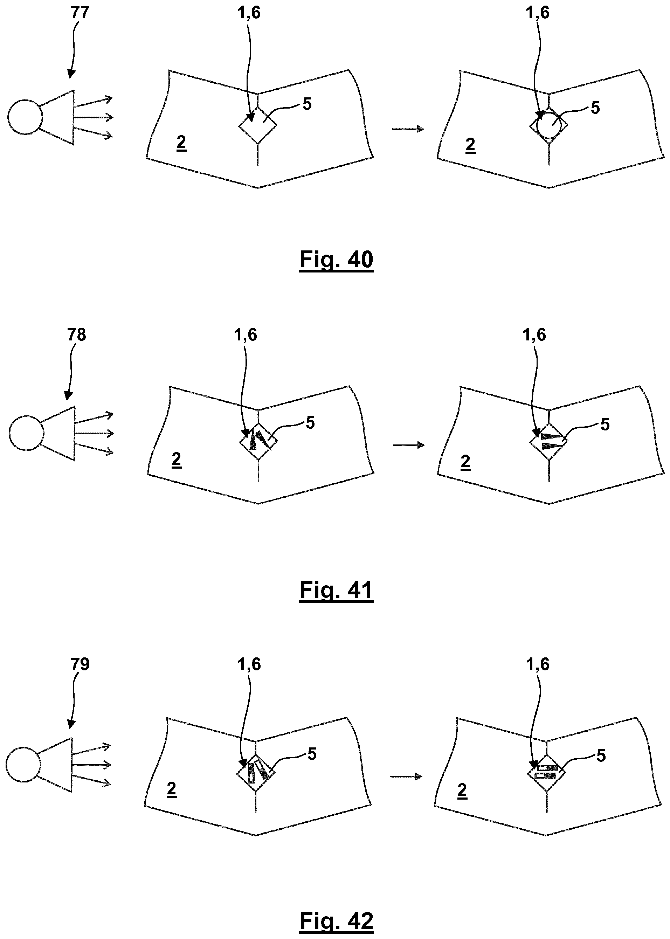

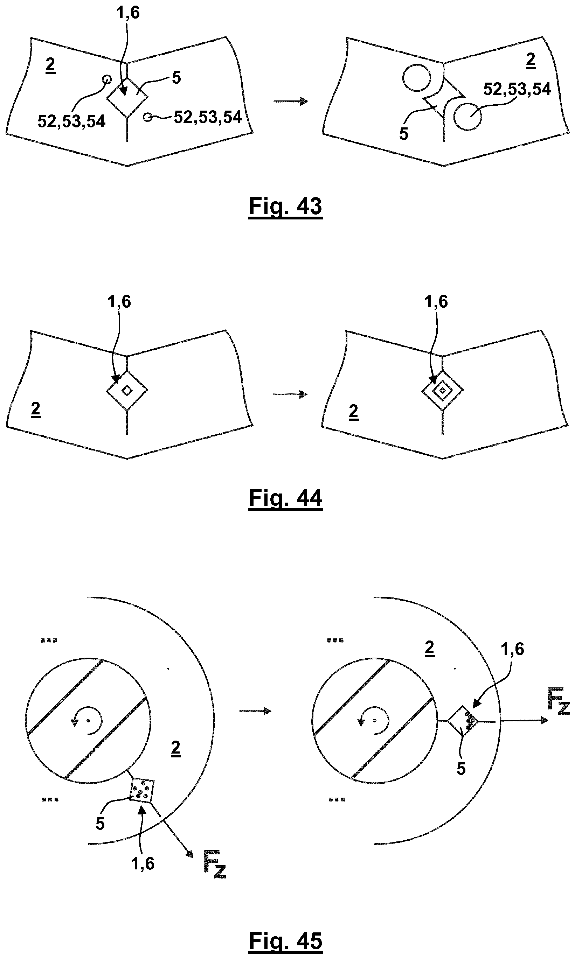

Möglich ist auch, dass an die erläuterte primäre Formgebung der Nanostrukturen 5 eine sekundäre Formgebung anschließt. Dabei können sich die Nanostrukturen noch in der geschlossenen Nano-Formgebungsstruktur befinden. Neben der geschilderten sekundären Formgebung kann auch ein anderweitiges sekundäres Einwirken auf die hergestellte Nanostruktur erfolgen. Entsprechende Einwirkungen können bspw. wie folgt sein:
- Beaufschlagen der Nanostruktur 5 in der Nano-Formgebungsstruktur 1 durch eine Heizeinrichtung 77 (vgl. **Fig. 40**);
- Beaufschlagen der Nanostruktur 5 mit einer elektrischen Einrichtung 78 zur Erzeugung eines elektrischen Felds. Dies führt zu einer veränderten Ladungsverteilung und Ausrichtung etwaiger elektrischer Dipole in dem Material 4 der Nanostruktur 5 (**Fig. 41**);
- Beaufschlagen der Nanostruktur 5 mit einer magnetischen Einrichtung 79, wodurch eine Ausrichtung oder veränderte Anordnung magnetischer Bestandteile des Materials 4 der Nanostruktur 5 erfolgt (**Fig. 42**);
- Veränderung des Drucks in einer Ausnehmung 52, Bohrung 53 oder Poren 54 mit einer hiermit einhergehenden Formänderung der zweiten Strukturgeometrie 6 (**Fig. 43**);
- Für den Fall der Nutzung unterschiedlicher Materialien 4 für die Nanostruktur 5: Diffusion oder Reaktion zwischen den Materialien nach Abwarten einer vorgegebenen Zeitspanne (**Fig. 44**);
- Verformung oder Materialtrennung durch Zentrifugieren der Nano-Formgebungsstruktur 1, beispielsweise bei spiralförmiger Führung um eine Förderwalze (**Fig. 45**).

Möglich sind Kombinationen der genannten Einwirkungsmöglichkeiten auf die Formgebung.

Weiterhin kann anschließend an den eigentlichen Fertigungsprozess und nach der Abgabestation 65 ein Reinigungsprozess erfolgen, bevor ein neues Befüllen der Nano-Formgebungsstruktur 1 erfolgt. Beispielsweise können verbleibende Reste des Materials 4 entfernt werden durch Lösung in einem Lösungsmittel, durch Ätzprozesse und/oder durch Ultraschallaussetzung.

Die erfindungsgemäßen Nanokörper können Einsatz finden beispielsweise für pharmazeutische Produkte. Rationell geformte Nanokörper können besondere und bestimmte Eigenschaften oder Reaktionen in einem Organismus hervorrufen, wobei die Eigenschaften über die Strukturgeometrie der Nanokörper eingestellt werden können.

Als Material für die Nanokörper können Polymere, Fluorophore, siRNA, biologische Materialien u. ä. eingesetzt werden. Möglich ist, dass die Nanokörper eine Veränderung der Oberflächenbeschaffenheit erfahren, indem deren Zetapotential verändert wird, indem die Nanokörper gezielt mit einer elektrischen Ladung versehen werden. Die Veränderung der Ladung der Nanokörper kann zur Folge haben, dass sich die Nanokörper verändert in den Organismen ablagern, sodass über die Ladung gezielt beeinflusst werden kann, an welchem Einsatzort die Nanokörper wirksam werden. Beispielsweise kann auch möglich sein, dass je nach Ladung der Nanokörper gezielt an den jeweiligen Einsatzorten eine Porenöffnung eines Organismus beeinflusst wird.

Sofern die Nano-Formgebungsstruktur eine hinreichend große Temperatur- und/oder Druckbeständigkeit besitzt, können als Material für die Nanokörper auch Metalle, Oxide und/oder Keramiken Einsatz finden, welche für die gewünschte Verformung auf eine hohe Temperatur gebracht werden müssen oder einem besonders großen Verformungsdruck ausgesetzt werden müssen. Ebenfalls möglich ist der Einsatz der Materialien in löslicher Form, welche dann in der Form kristallisieren, indem ein Lösungsmittel entweicht. Auch möglich sind Gemische von Polymeren, Metallen und/oder Oxiden (Keramiken), beispielsweise mit Nanometall- oder Keramikpartikeln, die in einem Polymer dispergiert sind für die Herstellung von größeren Nanokörpern.

Möglich ist auch die Anwendung der Nanokörper in der Chemie oder Materialwissenschaft. Hier finden gemäß dem Stand der Technik vorrangig sphärische Nanokörper Einsatz, die in einer Lösung durch Ausfällen hergestellt werden. Hier bietet die erfindungsgemäße Nanostruktur der Nanokörper mit Vorsprüngen, Vertiefungen und ähnlichen Konturvariationen erweiterte Möglichkeiten. Beispielsweise kann der Nanokörper katalytisch aktiv ausgestaltet sein. Ist der Nanokörper beispielsweise sternförmig ausgebildet, so ergibt sich eine größere Oberfläche, sodass der Nanokörper stärker aktiv wird oder reagiert. Auch möglicht ist, dass die Nanokörper infolge ihrer Strukturgeometrie anders gepackt oder gestapelt werden können als solche des Standes der Technik.

Ein weiteres Einsatzfeld der erfindungsgemäßen Nanokörper ist die Biologie. Hier können auch Nanokörper hergestellt werden, welche die Größenordnung der Zellen besitzen, sodass diese eine verbesserte Reaktion mit den Zellen ausbilden. Auch kann über die Strukturgeometrie der Nanokörper die Reaktion der Zellen mit den Nanokörpern gesteuert werden, da unterschiedliche Zellen unterschiedlich auf unterschiedliche Strukturgeometrien der Nanokörper reagieren. Möglich ist auch, dass über die gewählte Strukturgeometrie der Nanokörper diese gezielt von den Zellen beseitigt oder gefressen werden können oder aber nicht, sodass auch so genannte "Aufräumzellen" wirksam werden können. Ebenfalls möglich ist, dass die Nanokörper als Marker verwendet werden, wobei sich beispielsweise ein Protein an einen kleinen detektierbaren Nanokörper binden kann.

Ein weiterer Einsatzzweck der erfindungsgemäßen Nanokörper ist die Medizin sowie die Pharmazie. Hier kann ein so genanntes "Targeting" erfolgen: Aufgrund der Form und des Materials gelangen die Nanokörper gezielt an bestimmte Orte oder zu einem bestimmten Gewebe in den Organismen. Über die Form und das Material können auch Einsatzorte, nämlich bestimmte Gewebe ausgeschlossen werden, an welchen sich die Nanokörper ablagern und wirksam werden. Sind die Nanokörper gleichzeitig Wirkstoffträger, ergeben sich effektivere Therapeutika, da über das zuvor erläuterte "Targeting" der Wirkstoffträger gezielt an gewünschte Zielorte verbracht werden kann. Hierdurch werden u. U. auch geringere Dosen und geringere Nebenwirkungen ermöglicht, was auch unter dem Stichwort "Controlled Release" zusammengefasst wird.

Grundsätzlich ist ein Einsatz der erfindungsgemäßen Nanokörper in sämtlichen Bereichen möglich, in welchem bereits heute eine Anwendung von Nanopartikeln erfolgt.

### BEZUGSZEICHENLISTE

- 1: Nano-Formgebungsstruktur
- 2: Folie
- 3: erste Strukturgeometrie
- 4: Material
- 5: Nanostruktur
- 6: zweite Strukturgeometrie
- 7: Verformungsbereich
- 8: Ausnehmung
- 9: Oberfläche
- 10: Öffnung
- 11: Zacken
- 12: Zacken
- 13: Zacken
- 14: Zacken
- 15: Nanogeometrie
- 16: Strukturschenkel
- 17: Verbindungsbereich
- 18: Zackenbereich
- 19: Zackenbereich
- 20: Zackenbereich
- 21: Zackenbereich
- 22: Spaltbereich
- 23: Unterfläche
- 24: Zacken
- 25: Reihe
- 26: Abstand
- 27: Keilfläche
- 28: Keilfläche
- 29: Ausnehmung
- 30: Ausnehmung
- 31: Zugkraft
- 32: Zugkraft
- 33: Verformungskörper
- 34: Geschwindigkeit
- 35: Geschwindigkeit
- 36: Bewegungsrichtung
- 37: Ausnehmung
- 38: Druck
- 39: Druck
- 40: Form-Master
- 41: Strukturgeometrie
- 42: Vorsprung
- 43: Förderrichtung
- 44: Förderwalze
- 45: Förderwalze
- 46: Förderwalze
- 47: Härteeinrichtung
- 48: Lackschicht
- 49: Fläche
- 50: Tragschicht
- 51: Beschichtung
- 52: Ausnehmung
- 53: Bohrung
- 54: Poren
- 55: Druckluftkanal
- 56: Scharnier
- 57: Materialschwächung
- 58: Nut
- 59: Feder
- 60: Förderwalze
- 61: Förderwalze
- 62: Befüllstation
- 63: Formgebungsstation
- 64: Härtestation
- 65: Abgabestation
- 66: Auffangbehälter
- 67: Förderwalze
- 68: Förderwalze
- 69: Abstand
- 70: Förderwalze
- 71: Förderwalze
- 72: überschüssiges Material
- 73: Schaber
- 74: Abnahmekörper
- 75: Folie
- 76: Anpresswalze
- 77: Heizeinrichtung
- 78: elektrische Einrichtung
- 79: magnetische Einrichtung
- 80: Umschlingungswinkel

## Patentansprüche

1. Nano-Formgebungsstruktur (1) zur Herstellung einer Nanostruktur (5), welche eine vorbestimmte Nanogeometrie (15) besitzt, deren maximale Erstreckung kleiner ist als 0,1 mm, wobei die Nano-Formgebungsstruktur (1) von einer ersten Strukturgeometrie (3) in eine kleinere zweite Strukturgeometrie (6) verformbar ist, **dadurch gekennzeichnet, dass** die erste Strukturgeometrie (3) eine Öffnung (10) besitzt, während die zweite Strukturgeometrie (6)
a) keine Öffnung besitzt, so dass ein Material der herzustellenden Nanostruktur (5) vollständig und randgeschlossen in dieser eingeschlossen ist, oder
b) eine Öffnung besitzt, die kleiner ist als die Öffnung (10) der ersten Strukturgeometrie (3), so dass das Material der Nanostruktur (5) mit der verkleinerten Öffnung in dieser eingeschlossen ist.

2. Nano-Formgebungsstruktur (1) nach Anspruch 1, **dadurch gekennzeichnet, dass** die zweite Strukturgeometrie (6) zumindest teilweise der vorbestimmten Nanogeometrie (15) der herzustellenden Nanostruktur (5) entspricht.

3. Nano-Formgebungsstruktur (1) nach einem der vorhergehenden Ansprüche, **dadurch gekennzeichnet, dass** die erste Strukturgeometrie (3) mit zwei kurvenförmigen Strukturschenkeln (16a; 16b) begrenzt ist, welche einen ersten Öffnungswinkel α₁ bilden, während die Strukturschenkel (16a; 16b) in der zweiten Strukturgeometrie (6) einen kleineren zweiten Öffnungswinkel α₂ bilden.

4. Nano-Formgebungsstruktur (1) nach Anspruch 3, **dadurch gekennzeichnet, dass** die Strukturschenkel (16a; 16b) mit Verbindungsbereichen (17a; 17b) ausgestattet sind, welche in der zweiten Strukturgeometrie (6) zum Schließen der Öffnung (10) miteinander in Wechselwirkung treten.

5. Nano-Formgebungsstruktur (1) nach einem der vorhergehenden Ansprüche, **dadurch gekennzeichnet, dass** die Verformung von der ersten Strukturgeometrie (3) zu der zweiten Strukturgeometrie (6) und/oder für eine zumindest teilweise Rückverformung von der zweiten Strukturgeometrie (6) in die erste Strukturgeometrie (3) eine elastische Verformung ist.

6. Nano-Formgebungsstruktur (1) nach Anspruch 5, **dadurch gekennzeichnet, dass** die Nano-Formgebungsstruktur (1) in der ersten Strukturgeometrie (3) oder in der zweiten Strukturgeometrie (6) nicht elastisch verspannt ist.

7. Nano-Formgebungsstruktur (1) nach einem der vorhergehenden Ansprüche, **dadurch gekennzeichnet, dass** die Nano-Formgebungsstruktur (1) mit einer Beschichtung (51) versehen ist.

8. Nano-Formgebungsstruktur (1) nach einem der vorhergehenden Ansprüche, **dadurch gekennzeichnet, dass** ein Grundkörper mit einem Verformungsbereich (7) ausgestattet ist.

9. Folie (2) mit mindestens einer Nano-Formgebungsstruktur (1) nach einem der vorhergehenden Ansprüche.

10. Folie (2) nach Anspruch 9, **dadurch gekennzeichnet, dass** ein Grundkörper der Folie (2) mit einer PDMS-Folie gebildet ist.

11. Folie (2) nach Anspruch 9 oder 10, **dadurch gekennzeichnet, dass** die Folie (2) mit mehreren Schichten gebildet ist.

12. Nano-Formgebungsstruktur (1) nach einem der Ansprüche 1 bis 8 oder Folie (2) nach einem der Ansprüche 9 bis11, **dadurch gekennzeichnet, dass** eine Strukturierung der Nano-Formgebungsstruktur (1) durch ein maskengebendes Verfahren, insbesondere durch eine Foto-, Elektronenstrahl- oder Ionenstrahllithographie, hergestellt ist.

13. Nano-Formgebungsstruktur (1) nach einem der Ansprüche 1 bis 8 oder Folie (2) nach einem der Ansprüche 9 bis 11, **dadurch gekennzeichnet, dass** eine Strukturierung der Nano-Formgebungsstruktur (1) durch eine 2-Photonen-Lithographie hergestellt ist.

14. Nano-Formgebungsstruktur (1) nach einem der Ansprüche 1 bis 8 oder Folie (2) nach einem der Ansprüche 9 bis 11, **dadurch gekennzeichnet, dass** eine Strukturierung der Nano-Formgebungsstruktur (1) in einem Abformverfahren unter Einsatz eines Form-Masters (40) hergestellt ist.

15. Nano-Formgebungsstruktur (1) oder Folie nach Anspruch 14, **dadurch gekennzeichnet, dass** die Strukturierung der Nano-Formgebungsstruktur (1) mit einer Verformung während des Abformverfahrens hergestellt ist.

16. Verfahren zur Herstellung einer Nanostruktur (5), welche eine vorbestimmte Nanogeometrie (15) besitzt, deren maximale Erstreckung kleiner ist als 0,1 mm, mit folgenden Verfahrensschritten:
a) Bereitstellen einer Nano-Formgebungsstruktur (1) nach einem der Ansprüche 1 bis 8und 12 bis 15, wobei sich die Nano-Formgebungsstruktur (1) in der ersten Strukturgeometrie (3) befindet oder diese in die erste Strukturgeometrie (3) überführt wird,
b) Einbringen von Material (4) für die herzustellende Nanostruktur (5) in die erste Strukturgeometrie (3),
c) Verformen der Nano-Formgebungsstruktur (1) von der ersten Strukturgeometrie (3) in die kleinere zweite Strukturgeometrie (6), wobei während des Verformens das Material (4) für die herzustellende Nanostruktur (5) verformt wird,
d) Entnehmen der so hergestellten Nanostruktur (5) aus der Nano-Formgebungstruktur (1).

17. Verfahren nach Anspruch 16, **dadurch gekennzeichnet, dass** das nach dem Verformen der Nano-Formgebungsstruktur (1) von der ersten Strukturgeometrie (3) in die kleinere zweite Strukturgeometrie (6) eine zumindest teilweise Rückverformung von der zweiten Strukturgeometrie (6) zu der ersten Strukturgeometrie (3) erfolgt, bevor das Entnehmen der so hergestellten Nanostruktur (5) aus der Nano-Formgebungstruktur (1) erfolgt.

18. Verfahren nach Anspruch 16 oder 17, **dadurch gekennzeichnet, dass** das Verformen und/oder das Rückverformen unter Anlegen der Nano-Formgebungsstruktur (1) an einen konturierten Verformungskörper (33) erfolgt.

19. Verfahren nach Anspruch 18, **dadurch gekennzeichnet, dass** der Verformungskörper (33) eine Walze ist und ein Anlegen der Nano-Formgebungsstruktur (1) an einen Teilumfangsbereich des Verformungskörpers (33) unter Aufbringen von Zugkräften (31, 32) auf die Nano-Formgebungsstruktur (1) oder Folie (2) erfolgt.

20. Verfahren nach Anspruch 18, **dadurch gekennzeichnet, dass** das Anlegen der Nano-Formgebungsstruktur (1) an den Verformungskörper (33) durch Aufbringen von Kräften erfolgt, welche zumindest eine Komponente besitzen, welche vertikal zu einer Flächennormalen des Verformungskörpers (33) orientiert sind.

21. Verfahren nach Anspruch 20, **dadurch gekennzeichnet, dass** die Kräfte für das Anlegen der Nano-Formgebungsstruktur (1) an den Verformungskörper (33) durch Ansaugen oder fluidisches Anpressen an den Verformungskörper (33) erzeugt werden.

22. Verfahren nach einem der Ansprüche 16 bis 21, **dadurch gekennzeichnet, dass** die Herstellung einer Vielzahl von Nanostrukturen (5) mittels derselben Nano-Formgebungsstruktur (1) oder denselben Nano-Formgebungstrukturen (1 a, 1 b, 1 c) in einem endlosen Verfahren erfolgt.

23. Verfahren nach einem der Ansprüche 16 bis 22, **dadurch gekennzeichnet, dass** vor dem Entnehmen der so hergestellten Nanostruktur (5) aus der Nano-Formgebungstruktur (1) ein zumindest teilweises Härten des Materials (4) der Nanostruktur (5), insbesondere durch UV-Bestrahlung, durch Trocknung, durch chemische Reaktion oder durch thermisches Einwirken, erfolgt.

24. Verfahren nach einem der Ansprüche 16 bis 23, **dadurch gekennzeichnet, dass** vor dem Einbringen des Materials (4) für die herzustellende Nanostruktur (5) eine Beschichtung (51) in die Nano-Formgebungsstruktur (1) eingebracht wird.

25. Verfahren nach einem der Ansprüche 16 bis 24, **dadurch gekennzeichnet, dass** das Einbringen
- von Material (4) für die herzustellende Nanostruktur (5) und/oder
- der Beschichtung (51) nach Anspruch 23
durch Sprühen, Eintauchen, Bestreichen, Fließen, Bedampfen und/oder Eindrücken erfolgt.

26. Verfahren nach einem der Ansprüche 16 bis 25, **dadurch gekennzeichnet, dass** eine Vereinzelung mehrerer hergestellter Nanostrukturen (5) durch Brechen, Ätzen, Ultraschall oder Erwärmen erfolgt.

27. Verfahren nach einem der Ansprüche 16 bis 26, **dadurch gekennzeichnet, dass** ein Herauslösen der Nanostruktur (5) unter Einwirken von Ultraschall, durch einen Fluidstrom, durch eine Beschichtung oder durch Herausdrücken mittels Formänderung der Nano-Formgebungsstruktur (1) herbeigeführt oder unterstützt wird.

28. Verfahren nach einem der Ansprüche 16 bis 27, **dadurch gekennzeichnet, dass** mit dem Verformen der Nano-Formgebungsstruktur (1) von der ersten Strukturgeometrie (3) in die zweite Strukturgeometrie (6) überschüssiges Material (72) aus einer Öffnung gedrückt wird.

29. Verfahren nach einem der Ansprüche 16 bis 28, **dadurch gekennzeichnet, dass** überschüssiges Material (72) durch
a) ein Lösungsmittel,
b) einen Schaber (73),
c) Übertragung auf ein Abnahmeelement, insbesondere eine weitere Folie oder Walze,
d) Ätzen und/oder
e) Einwirken von Ultraschall
von der Nano-Formgebungsstruktur (1) oder der Folie (2) beseitigt wird.

## Claims

1. Nano shaping structure (1) for producing a nanostructure (5) having a predetermined nanogeometry (15), the maximum extension of which is smaller than 0.1 mm, the nano shaping structure (1) being deformable from a first structure geometry (3) into a smaller second structure geometry (6), **characterised in that**
the first structure geometry (3) has an opening (10), while the second structure geometry (6)
a) has no opening, so that a material of the nanostructure (5) to be produced is completely and with closed boundaries enclosed in the second structure geometry (6), or
b) has an opening which is smaller than the opening (10) of the first structure geometry (3), so that the material of the nanostructure (5) is enclosed in the second structure geometry (6) with the reduced opening.

2. Nano shaping structure (1) according to claim 1, **characterised in that** the second structure geometry (6) at least partially corresponds to the predetermined nanogeometry (15) of the nanostructure (5) to be produced.

3. Nano shaping structure (1) according to one of the preceding claims, **characterised in that** the first structure geometry (3) is limited with two curved structure legs (16a; 16b) which form a first opening angle α₁, while the structure legs (16a; 16b) form a smaller second opening angle α₂ in the second structure geometry (6).

4. Nano shaping structure (1) according to claim 3, **characterised in that** the structure legs (16a; 16b) are equipped with connecting portions (17a; 17b), which in the second structure geometry (6) interact with each other for closing the opening (10).

5. Nano shaping structure (1) according to one of the preceding claims, **characterised in that** the deformation from the first structure geometry (3) to the second structure geometry (6) and/or for an at least partial reverse deformation from the second structure geometry (6) into the first structure geometry (3) is an elastic deformation.

6. Nano shaping structure (1) according to claim 5, **characterised in that** the nano shaping structure (1) is not under elastic tension in the first structure geometry (3) or in the second structure geometry (6).

7. Nano shaping structure (1) according to one of the preceding claims, **characterised in that** the nano shaping structure (1) comprises a coating (51).

8. Nano shaping structure (1) according to one of the preceding claims, **characterised in that** a base body comprises a deformation portion (7).

9. Film (2) with at least one nano shaping structure (1) according to one of the preceding claims.

10. Film (2) according to claim 9, **characterised in that** a base body of the film (2) is formed with a PDMS film.

11. Film (2) according to claim 9 or 10, **characterised in that** the film (2) comprises multiple layers.

12. Nano shaping structure (1) according to one of the claims 1 to 8 or film (2) according to one of the claims 9 to 11, **characterised in that** a structuring of the nano shaping structure (1) has been produced by a mask-creating process, especially by photo lithography, electron beam lithography or ion beam lithography.

13. Nano shaping structure (1) according to one of the claims 1 to 8 or film (2) according to one of the claims 9 to 11, **characterised in that** a structuring of the nano shaping structure (1) has been produced by two-photon lithography.

14. Nano shaping structure (1) according to one of the claims 1 to 8 or film (2) according to one of the claims 9 to 11, **characterised in that** a structuring of the nano shaping structure (1) has been produced in a moulding process using a mould master (40).

15. Nano shaping structure (1) or film according to claim 14, **characterised in that** the structuring of the nano shaping structure (1) has been produced with a deformation during the moulding process.

16. Method for producing a nanostructure (5) having a predetermined nanogeometry (15), the maximum extension of which is smaller than 0.1 mm, with the following method steps:
a) providing a nano shaping structure (1) according to one of the claims 1 to 8 and 12 to 15, where the nano shaping structure (1) is in the first structure geometry (3) or is brought into the first structure geometry (3),
b) inserting material (4) for the nanostructure (5) to be produced into the first structure geometry (3),
c) deforming the nano shaping structure (1) from the first structure geometry (3) into the smaller second structure geometry (6), where during the deforming the material (4) for the nanostructure (5) to be produced is deformed,
d) removing the nanostructure (5) produced in this way from the nano shaping structure (1).

17. Method according to claim 16, **characterised in that** after the deforming of the nano shaping structure (1) from the first structure geometry (3) into the smaller second structure geometry (6) an at least partial reverse deformation from the second structure geometry (6) to the first structure geometry (3) takes place before the nanostructure (5) produced in this way is removed from the nano shaping structure (1).

18. Method according to claim 16 or 17, **characterised in that** the deforming and/or the reverse deforming is done while laying the nano shaping structure (1) against a contoured deforming body (33).

19. Method according to claim 18, **characterised in that** the deforming body (33) is a roller and a laying of the nano shaping structure (1) against a partial circumference region of the deforming body (33) is done while applying tension forces (31, 32) onto the nano shaping structure (1) or film (2).

20. Method according to claim 18, **characterised in that** the laying of the nano shaping structure (1) against the deforming body (33) is done by applying forces which have at least a component oriented vertical to a surface normal of the deforming body (33).

21. Method according to claim 20, **characterised in that** the forces for the laying of the nano shaping structure (1) against the deforming body (33) are produced by suction or fluidic pressing against the deforming body (33).

22. Method according to one of the claims 16 to 21, **characterised in that** the production of a multiple of nanostructures (5) is done by means of the same nano shaping structure (1) or the same nano shaping structures (1 a, 1 b, 1 c) in an endless process.

23. Method according to one of the claims 16 to 22, **characterised in that** before removing the nanostructure (5) produced in this way from the nano shaping structure (1) at least a partial hardening of the material (4) of the nanostructure (5) is done, especially by UV irradiation, by drying, by chemical reaction or by thermal impact.

24. Method according to one of the claims 16 to 23, **characterised in that** before the insertion of the material (4) for the nanostructure (5) to be produced a coating (51) is applied into the nano shaping structure (1).

25. Method according to one of the claims 16 to 24, **characterised in that** the
- insertion of material (4) for the nanostructure (5) to be produced and/or
- application of the coating (51) according to claim 23
is done by spraying, dipping, brushing, flowing, vapour-coating and/or pressing.

26. Method according to one of the claims 16 to 25, **characterised in that** a separation of several nanostructures (5) produced is done by breaking, etching, ultrasound or heating.

27. Method according to one of the claims 16 to 26, **characterised in that** a dislodging of the nanostructure (5) is induced or supported under the impact of ultrasound, by a fluid stream, by a coating or by pressing out by means of a change of the shape of the nano shaping structure (1).

28. Method according to one of the claims 16 to 27, **characterised in that** with the deforming of the nano shaping structure (1) from the first structure geometry (3) into the second structure geometry (6) surplus material (72) is pressed out of an opening.

29. Method according to one of the claims 16 to 28, **characterised in that** surplus material (72) is removed from the nano shaping structure (1) or the film (2) by
a) a solvent,
b) a scraper (73),
c) transfer to a removal element, especially another film or roller,
d) etching and/or
e) application of ultrasound.

## Revendications

1. Structure de formage nanométrique (1) pour la fabrication d'une nano-structure (5), qui présente une nano-géométrie (15) prédéterminée, dont l'extension maximale est inférieure à 0,1 mm, la structure de formage nanométrique (1) pouvant être déformée par une première géométrie de structure (3) en une deuxième géométrie de structure (6), **caractérisée en ce que**
la première géométrie de structure (3) comprend une ouverture (10), tandis que la deuxième géométrie de structure (6)
a) ne présente pas d'ouverture, de façon à ce qu'un matériau de la nano-structure (5) à fabriquer soit intégrée entièrement et avec des bords formés dans celle-ci ou
b) présente une ouverture qui est plus petite que l'ouverture (10) de la première géométrie de structure (3), de façon à ce que le matériau de la nano-structure (5) avec l'ouverture réduite soit intégré dans celle-ci.

2. Structure de formage nanométrique (1) selon la revendication 1, **caractérisée en ce que** la deuxième géométrie de structure (6) correspond au moins partiellement à la nano-géométrie (15) prédéterminée de la nano-structure (5) à fabriquer.

3. Structure de formage nanométrique (1) selon l'une des revendications précédentes, **caractérisée en ce que** la première géométrie de structure (3) est limitée avec deux montants de structure courbés (16a ; 16b), qui forment un premier angle d'ouverture α₁, tandis que les montants de structure (16a; 16b) de la deuxième géométrie de structure (6) forment un deuxième angle d'ouverture α₂, plus petit.

4. Structure de formage nanométrique (1) selon la revendication 3, **caractérisée en ce que** les montants de structure (16a ; 16b) sont munis de zones de liaison (17a ; 17b) qui entrent en interaction entre elles dans la deuxième géométrie de structure (6) pour la fermeture de l'ouverture (10).

5. Structure de formage nanométrique (1) selon l'une des revendications précédentes, **caractérisée en ce que** la déformation de la première géométrie de structure (3) vers la deuxième géométrie de structure (6) et/ou pour une déformation inverse au moins partielle de la deuxième géométrie de structure (6) vers la première géométrie de structure (3) est une déformation élastique.

6. Structure de formage nanométrique (1) selon la revendication 5, **caractérisée en ce que** la structure de formage nanométrique (1) n'est pas précontrainte de manière élastique dans la première géométrie de structure (3) ou dans la deuxième géométrie de structure (6).

7. Structure de formage nanométrique (1) selon l'une des revendications précédentes, **caractérisée en ce que** la structure de formage nanométrique (1) est munie d'un revêtement (51).

8. Structure de formage nanométrique (1) selon l'une des revendications précédentes, **caractérisée en ce qu'**un corps de base est muni d'une zone de déformation (7).

9. Film (2) avec au moins une structure de formage nanométrique (1) selon l'une des revendications précédentes.

10. Film (2) selon la revendication 9, **caractérisée en ce qu'**un corps de base du film (2) est constitué d'un film PDMS.

11. Film (2) selon la revendication 9 ou 10, **caractérisée en ce que** le film (2) est constitué de plusieurs couches.

12. Structure de formage nanométrique (1) selon l'une des revendications 1 à 8 ou film (2) selon l'une des revendications 9 à 11, **caractérisé en ce qu'**une structuration de la structure de formage nanométrique (1) est réalisée à l'aide d'un procédé de masquage, plus particulièrement une photolithographie, une lithographie à faisceau d'électrons ou une lithographie à faisceau ionique.

13. Structure de formage nanométrique (1) selon l'une des revendications 1 à 8 ou film (2) selon l'une des revendications 9 à 11, **caractérisé en ce qu'**une structuration de la structure de formage nanométrique (1) est réalisée à l'aide d'une lithographie à 2 photons.

14. Structure de formage nanométrique (1) selon l'une des revendications 1 à 8 ou film (2) selon l'une des revendications 9 à 11, **caractérisé en ce qu'**une structuration de la structure de formage nanométrique (1) est réalisée à l'aide d'un procédé de moulage grâce à un gabarit de forme (40).

15. Structure de formage nanométrique (1) ou film selon la revendication 14, **caractérisée en ce que** la structuration de la structure de formage nanométrique (1) est réalisée avec une déformation pendant le procédé de moulage.

16. Procédé de fabrication d'une structure nanométrique (5), qui présente une nano-géométrie (15) prédéterminée, dont l'extension maximale est inférieure à 0,1 mm, avec les étapes de procédé suivantes:
a) réalisation d'une structure de formage nanométrique (1) selon l'une des revendications 1 à 8 et 12 à 15, la structure de formage nanométrique (1) se trouvant dans la première géométrie de structure (3) ou celle-ci étant transformée dans la première géométrie de structure (3),
b) apport d'un matériau (4) pour la nano-structure (5) à fabriquer dans la première géométrie de structure (3),
c) déformation de la structure de formage nanométrique (1) de la première géométrie de structure (3) vers la deuxième géométrie de structure (6), plus petite, moyennant quoi, pendant la déformation, le matériau (4) pour la nano-structure (5) à fabriquer est déformée,
d) retrait de la nano-structure (5) ainsi fabriquée hors de la structure de formage nanométrique (1).

17. Procédé selon la revendication 16, **caractérisé en ce que**, après la déformation de la structure de formage nanométrique (1) de la première géométrie de structure (3) vers la deuxième géométrie de structure (6), plus petite, une déformation inverse au moins partielle a lieu de la deuxième géométrie de structure (6) vers la première géométrie de structure (3), avant le retrait de la nano-structure (5) ainsi fabriquée hors de la structure de formage nanométrique (1).

18. Procédé selon la revendication 16 ou 17, **caractérisé en ce que** la déformation et/ou la déformation inverse a lieu par appui de la structure de formage nanométrique (1) contre un corps de déformation (33) profilé.

19. Procédé selon la revendication 18, **caractérisé en ce que** le corps de déformation (33) est un rouleau et un appui de la structure de formage nanométrique (1) contre une partie de la circonférence du corps de déformation (33) a lieu par l'application de forces de traction (31, 32) sur la structure de formage nanométrique (1) ou sur le film (2).

20. Procédé selon la revendication 18, **caractérisé en ce que** l'appui de la structure de formage nanométrique (1) contre le corps de déformation (33) a lieu par l'application de forces, qui comprennent au moins une composante orientée verticalement par rapport à une normale de la surface du corps de déformation (33).

21. Procédé selon la revendication 20, **caractérisé en ce que** les forces pour l'appui de la structure de formage nanométrique (1) contre le corps de déformation (33) a lieu par aspiration ou compression fluidique contre le corps de déformation (33).

22. Procédé selon l'une des revendications 16 à 21, **caractérisé en ce que** la fabrication d'une pluralité de nano-structures (5) a lieu au moyen de la même structure de formage nanométrique (1) ou des mêmes structures de formage nanométrique (1 a, 1 b, 1 c) à l'aide d'un procédé en continu.

23. Procédé selon l'une des revendications 16 à 22, **caractérisé en ce que**, avant le retrait de la nano-structure (5) ainsi fabriquée hors de la structure de formage nanométrique (1), a lieu un durcissement au moins partiel du matériau (4) de la nano-structure (5), plus particulièrement par irradiation UV, par séchage, par réaction chimique ou par action thermique.

24. Procédé selon l'une des revendications 16 à 23, **caractérisé en ce que**, avant l'apport de matériau (4) pour la nano-structure (5) à fabriquer, un revêtement (51) est intégré dans la structure de formage nanométrique (1).

25. Procédé selon l'une des revendications 16 à 24, **caractérisé en ce que** l'apport
- de matériau (4) pour la nano-structure (5) à fabriquer et/ou
- du revêtement (51) selon la revendication 23
a lieu par pulvérisation, immersion, enduction, écoulement, vaporisation et/ou impression.

26. Procédé selon l'une des revendications 16 à 25, **caractérisé en ce qu'**une individualisation de plusieurs nano-structures (5) fabriquées a lieu par cassure, gravure, ultrasons ou chauffage.

27. Procédé selon l'une des revendications 16 à 26, **caractérisé en ce qu'**un détachement de la nano-structure (5) est provoquée ou favorisée par l'action d'ultrasons, par un écoulement de fluide, par un revêtement ou par expulsion par changement de forme de la structure de formage nanométrique (1).

28. Procédé selon l'une des revendications 16 à 27, **caractérisé en ce que**, avec la déformation de la structure de formage nanométrique (1) de la première géométrie de structure (3) vers la deuxième géométrie de structure (6), le matériau en excès (72) est comprimé à travers une ouverture.

29. Procédé selon l'une des revendications 16 à 28, **caractérisé en ce que** le matériau en excès (72) est éliminé par
a) un solvant,
b) un racloir (73),
c) le transfert sur un élément de retrait, plus particulièrement un autre film ou un autre rouleau,
d) gravure et/ou
e) action d'ultrasons
de la structure de formage nanométrique (1) ou du film (2).
